# EUROPÄISCHE PATENTSCHRIFT

(11) **EP 3 072 262 B1**
(45) Veröffentlichungstag und Bekanntmachung des Hinweises auf die Patenterteilung: **17.07.2019**
(21) Anmeldenummer: 14803093.5
(22) Anmeldetag: 24.11.2014
(51) Int. Cl.: H04L 12/40, H04L 12/24, H04L 12/437, G06F 13/362, G06F 13/40, G06F 13/42

(54) **BUSTEILNEHMER-EINRICHTUNG AND VERFAHREN ZUM BETRIEB EINES SERIELLEN DATENBUSSES**
BUS PARTICIPANT DEVICE AND METHOD FOR OPERATING A SERIAL BUS
ÉQUIPEMENT DE PARTICIPANT À UN BUS ET PROCÉDÉ D'OPÉRATION D'UN BUS SÉRIEL

(30) Priorität: 23.11.2013 DE 102013223971
(43) Veröffentlichungstag der Anmeldung: 28.09.2016
(73) Patentinhaber: Koenig-Pa GmbH, 91207 Lauf an der Pegnitz (DE)
(72) Erfinder: SPIEGEL, Gerhard, 90480 Nürnberg (DE); VYSOTSKI, Viktor, 90592 Schwarzenbruck (DE)
(74) Vertreter: Dr. Langfinger & Partner
(86) Internationale Anmeldenummer: PCT/EP2014/075441
(87) Internationale Veröffentlichungsnummer: WO 2015/075249

(56) Entgegenhaltungen:
- US-A- 5 751 220
- US-A1- 2009 235 001
- US-A1- 2011 029 687

## Beschreibung

Die Erfindung betrifft eine Busteilnehmer-Einrichtung sowie ein Verfahren zum Betrieb einer Busteilnehmer-Einrichtung. Die Busteilnehmer-Einrichtung ist zum Anschluss an einen seriellen Datenbus mit einer Zugriffsteuerung auf das Medium nach einem Master Slave Verfahren vorgesehen. Weitere mögliche Merkmale sind die aktive Weiterleitung nach dem Hop-to-Hop-Verfahren und die gemeinsame Nutzung der Daten eines Datentelegramms nach dem Summenrahmenverfahren. Busteilnehmer-Einrichtungen mit solchen Merkmalen sind an sich bekannt. Beispiele für eine Busteilnehmer-Einrichtung der eingangs genannten Art sind Geräte, die an dem Datenbus als Master oder als Slave fungieren. Der Datenbus und die Gesamtheit der daran angeschlossenen Geräte, also ein Master und zumindest ein Slave, üblicherweise eine Mehrzahl von Slaves, werden im Folgenden als Netzwerk oder kurz als Netz bezeichnet.

Nur der Master versendet in dem Netz Datentelegramme, die in der üblichen Fachterminologie auch als Frame bzw. Rahmen bezeichnet werden, über den Datenbus.

Ein Frame kann alle Daten oder nur die Individualdaten eines Slaves beinhalten. Beispielweise kann bei dem Hop-to-Hop-Verfahren ein auf den Datenbus gegebenes Datentelegramm von einem oder der Reihe nach von mehreren oder vorzugsweise jedem an den Bus angeschlossenen Slave empfangen werden. Ein Slave kann dabei dem vorbeifließenden Datenstrom die ihm in dem Datentelegramm zugeordneten Datenpaketsegmente (Eingangsdaten) entnehmen und seine Ausgangsdaten als Datenpaketsegmente in das Datentelegramm einfügen. Jeder Slave leitet das so modifizierte Datentelegramm an einen jeweils nachfolgenden Slave weiter. Üblicherweise verfahren alle Slaves in gleicher Weise. Der letzte Slave in einer strangförmigen, also nicht ringförmig geschlossenen Busarchitektur erkennt sich selbst als letzter Slave daran, dass an seine Sendeschnittstelle kein weiterer Slave angeschlossen ist, was als offener Port bezeichnet wird. Der letzte Slave des Datenbusses schickt dann das Datentelegramm wieder über seine Empfangsschnittstelle an den vorherigen Slave zurück. Alle vorgelagerten Slaves verfahren in gleicher Weise. So erreicht das Datentelegramm 18 wieder den Master. Der letzte Slave schließt also einen logischen Ring. Physikalisch sind alle Slaves oder Slavegruppen in Reihe geschaltet und passiv, d.h. sie können nur im Rahmen eines vom Master auf den Datenbus gegebenen Datentelegramms selbst Daten auf den Datenbus geben. Bei einem solchen Summenrahmenverfahren bestehen funktionale Unterschiede zwischen einem als Master fungierenden Kommunikationsteilnehmer und einem als Slave fungierenden Kommunikationsteilnehmer. Ein als Slave fungierender Kommunikationsteilnehmer zeichnet sich dabei durch eine vergleichsweise einfache Ausführung aus. Bei einem Ausfall des Masters findet innerhalb des Netzes keine Kommunikation mehr statt, da der Initiator fehlt. Das ganze Netz steht gleichsam still.

Speziell in der Ethernet Kommunikation wird nach dem Stand der Technik aus Kostengründen meist vermieden, dass zirkuläre Strukturen auftreten. Will man trotzdem eine redundante Kommunikation ausprägen, so kann man die zirkulären Strukturen auftrennen, indem man einzelne Verbindungen in einer Kette von Hop-to-Hop-Busteilnehmern deaktiviert. Die Verfahren, die dabei genutzt werden, insbesondere, um die Übertragungsrichtung umzukehren, sind allerdings langsam und deshalb für schnelle Echtzeitkommunikation nicht geeignet. Einen Überblick über die Varianten kann man in der IEC-Norm 62439 finden. In 62439-3 ist auch ein sogenanntes stoßfreies Protokoll hinsichtlich des Ausfalls von Kommunikationsstrecken definiert. Dies bedeutet, dass es möglichst kein Stocken in der Kommunikation und keine Datenverluste möglichst gibt, was insbesondere dadurch erreicht werden kann, dass der Übergang bei der Umschaltung möglichst schnell stattfindet. Die Definition gilt aber nicht bezüglich der Anwendungsfunktion in den folgenden zwei Ausprägungen:
PRP (Parallel Redundancy Protocol) beschreibt eine Methode, in der einfach die Netze sowie deren Anschlüsse dupliziert werden. Dies ist aber sehr aufwendig.
HSR (High availability Seamless Ring) beschreibt ein Verfahren, bei dem auf den beiden Pfaden durch den Ring die redundanten Daten bearbeitet werden. Dies bedeutet jedoch einen Mehraufwand in der Realisierung aller Slaves.

In einer bereits bekannten Lösung des Unternehmens Beckhoff Automation GmbH ist eine Redundanz von zwei Mastern vorgesehen, wobei über drei Switches, vier zusätzliche Leitungen sowie mittels eines zusätzlichen proprietären oder auf dem standardisierten Protokoll, z.B. dem EtherCAT Automation Protocol (EAP) aufbauend eine Kommunikation zwischen Mastern erfolgt. Die Lösung ist in der Beckhoff Application Note K9321-0809-0004 veröffentlicht worden. Diese Lösung ist sehr aufwendig. Außerdem ist die Lösung nicht für sicherheitsrelevante oder synchrone Anwendung geeignet.

Die US 2011/0029687 A1 beschreibt ein Kommunikationsnetzwerk mit einem Master, welcher Frames über das Netzwerk sendet, einem Ersatzmaster, einem Quellenknoten der Daten in Frames schreibt, und einem Zielknoten, der Daten aus den Frames entnimmt.

Die US 5,751,220 offenbart ein Master/Slave-Netzwerk, bei dem ein Master für die Synchronisation des Netzes sorgt. Im Netzwerk sind Slaves mit Ersatzmasterfunktion vorhanden, welche sich in einen Master umschalten lassen.

Die US 2009/0235001 A1 offenbart einen Master/Slave-Datenbus mit einem primären aktiven Master, wenigstens einem Slave und einem zunächst inaktiven Ersatzmaster. Das Kommunikationssystem kann rekonfiguriert und Ersatzmaster aktiviert werden.

Speziell in Master-Slave-Netzwerken mit Sicherheitsfunktionen, bei denen es schwierig sein kann, die Slaves oder ein Gesamtsystem, in dem das Netzwerk arbeitet, bei einem Masterausfall in einen sicheren Zustand zu versetzen, wie zum Beispiel bei einem Fahrzeug, ist ein Ersatzmaster, der schnell die Funktion des ausgefallen Masters übernimmt, sehr wichtig.

Die Aufgabe der vorliegenden Erfindung besteht darin, eine einfache und effiziente Möglichkeit zur Busmaster-Umschaltung für ein Master-Slave-Netzwerk anzugeben.

Diese Aufgabe wird erfindungsgemäß mit einer Busteilnehmer-Einrichtung mit den Merkmalen des Anspruchs 1 gelöst. Die Busteilnehmer-Einrichtung umfasst in an sich bekannter Art und Weise Mittel zum Anschluss an einen seriellen Datenbus und zum Empfangen eines nach einem Hop-to-Hop-Verfahren über den Datenbus übertragenen Datentelegramms. Darüber hinaus ist für die Busteilnehmer-Einrichtung vorgesehen, dass sie an dem Datenbus in einer Slave-Betriebsart mittels einer von der Busteilnehmer-Einrichtung umfassten Slave-Einheit als Slave fungiert. Die Busteilnehmer-Einrichtung umfasst eine zuschaltbare Master-Einheit.

Auf diese Weise wird eine Master-Redundanz ohne zusätzliche Verbindungen im Vergleich zu einem System mit Slaves ohne zusätzlicher Master-Redundanzfunktion geschaffen. Die Redundanz wird daher mit sehr geringem Aufwand zusätzlich bereitgestellt und kann außerdem leicht in bestehenden Systemen nachgerüstet werden, indem z.B. ein bestehender Slave durch eine erfindungsgemäße Busteilnehmer-Einrichtung ersetzt wird. Ein bestehendes System kann auch durch zusätzlichen Anschluss einer erfindungsgemäßen Busteilnehmer-Einrichtung mit Masterredundanz aufgerüstet werden. Ein mit erfindungsgemäßer Masterredundanz ausgestattetes Bussystem kann dadurch hohe Fail-Operabilität, also eine hohe Wahrscheinlichkeit eines Weiterbetriebs nach einer Störung, bieten. Die Busteilnehmer-Einrichtung kann als mechanisch separate Einheit ausgeführt sein.

Vorzugsweise ist mittels der Slave-Einheit ist eine Übertragung von Datentelegrammen über den Datenbus überwachbar. Außerdem ist in Abhängigkeit von einem Ergebnis der Überwachung mittels der Slave-Einheit der Busteilnehmer-Einrichtung eine Aktivierung der von der Busteilnehmer-Einrichtung umfassten Master-Einheit bewirkbar.

Ein Vorteil der Aktivierung eines Masters durch einen Slave ist in der größeren Komplexität eines Masters begründet, der dadurch eine höhere Ausfallwahrscheinlichkeit hat. Insbesondere ist der Master im Wesentlichen durch Software gesteuert und der Slave im Wesentlichen durch Hardware, sodass sich durch die Verwendung des sichereren Slaves für die Aktivierung im Gegensatz zu einer Selbstaktivierung des Masters die Sicherheit des Gesamtsystems erhöht. Die Master- und die Slave-Einheit sind gemeinsam in der Busteilnehmer-Einrichtung angeordnet. Die Aktivierung kann daher intern in der Busteilnehmer-Einrichtung erfolgen. Dann ist die Aktivierung der Master-Einheit als Busmaster unabhängig von Problemen des Busbetriebs, was insbesondere bei der Umschaltung nach einer Veränderung der Busarchitektur, z.B. durch Kabelbruch oder Ausfall einer weiterleitenden Einheit oder einem Ausfall des bisherigen Masters, relevant ist. Auch dies erhöht die Ausfallsicherheit des Busbetriebs beträchtlich. Mittels ausschließlicher Überwachung durch die Slave-Einheit kann die Sicherheit des Systems noch weiter erhöht werden.

Denkbar ist weiter, den zusätzlichen Master zu aktivieren oder zu deaktivieren, indem er über Nachrichten an die Slave-Einheit der Busteilnehmer-Einrichtung von extern aktiviert oder deaktiviert sind. Dazu existiert in der Busteilnehmer-Einrichtung eine interne Kommunikation zwischen der Master-Einheit und der Slave-Einheit, beispielsweise über einen gemeinsamen Speicherbereich. Die Master-Einheit kann als Untergruppe der Slave-Einheit von externen Busteilnehmern aus ansprechbar sein. Die im Slavebetrieb ausschließlich als Slave fungierende Busteilnehmer-Einrichtung wird gemäß dem hier vorgeschlagenen Ansatz also gewissermaßen zu einer Kontrollinstanz in dem Netzwerk, ohne dabei ihre Slave-Eigenschaft aufzugeben. D.h., die als Slave fungierende Busteilnehmer-Einrichtung führt die üblichen Funktionen eines Slave aus. Insbesondere überwacht der Slave der Busteilnehmer-Einrichtung einen Empfang eines von einem Busmaster außerhalb der Busteilnehmer-Einrichtung auf den Datenbus gegebenen Datentelegramms. Weiter kann dieser Slave gemäß einer jeweiligen Konfiguration Datenpaketsegmente aus dem Datenstrom des Datentelegramms entnehmen. Gemäß einer jeweiligen Konfiguration kann dieser Slave Datenpaketsegmente in den Datenstrom des Datentelegramms einfügen. Aufgrund der Überwachung der Übertragung von Datentelegrammen über den Datenbus durch die Slave-Einheit der Busteilnehmer-Einrichtung ist zum Beispiel ein Ausfall des in dem Netzwerk als Master fungierenden Geräts erkennbar. Mittels der Slave-Einheit ist beim Erkennen einer solchen Situation automatisch eine Aktivierung der von der Busteilnehmer-Einrichtung umfassten Master-Einheit bewirkbar. Beim Betrieb der Busteilnehmer-Einrichtung kann auf das Erkennen einer solchen Situation hin automatisch die Aktivierung der von der Busteilnehmer-Einrichtung umfassten Master-Einheit erfolgen. Weil die Busteilnehmer-Einrichtung eine Slave-Einheit und eine im Slavebetrieb passive, aber mittels der Slave-Einheit aktivierbare Master-Einheit umfasst und demnach an dem Datenbus oder in dem Netz entweder als Slave oder als Master fungieren kann, wird die hier vorgeschlagene Busteilnehmer-Einrichtung im Folgenden auch als Hybrid bezeichnet. Unter einem passiven Master wird eine Betriebsweise dieses Masters verstanden, bei der dieser Daten mithört, die aus dem Bus übertragen werden und Daten auswertet die er vom Slave in dem Hybrid empfängt. Bevorzugt hört der passive Master alle dieser Daten mit. Der passive Master sendet jedoch keine Daten. Zum Mithören ist der passive Master vorzugsweise mit dem Datenbus verbunden.

Zur Aktivierung oder Deaktivierung der Master-Einheit mittels der Slave-Einheit kann die Slave-Einheit einen Befehl dazu aus der bisher passiven, aber beispielsweise den Datenverkehr mithörenden Master-Einheit erhalten, beispielsweise als Ergebnisse einer Fehlerüberwachung des bisher aktiven Masters. Die Slave-Einheit kann auch selbst den Aktivierungsfall erkennen, beispielsweise an Hand ausbleibender Datentelegramme 18 oder nicht erwarteter Empfangszeitpunkte.

An den Datenbus können zwei oder mehrere, insbesondere gleichartige Busteilnehmer-Einrichtungen angeschlossen sein, die eine einfache oder mehrfache Master-Redundanz bilden können. Bei einer mehrfachen Master-Redundanz wird vorzugsweise eine Instanz installiert, die bei einer Masterumschaltung auswählt, welcher der Ersatzmaster zum Einsatz kommt. Dadurch wird ein Kollidieren mehrerer Master auf dem Bus vermieden.

Vorzugsweise weist die Busteilnehmer-Einrichtung genau zwei Schnittstellen zur Kommunikation mit dem Bus auf. Bevorzugt weist sie keine weiteren Schnittstellen außer einer oder mehreren Schnittstellen zum Bus auf. Die Schnittstellen sind bevorzugt Ethernet-Schnittstellen. Alternativ ist eine dritte Schnittstelle für die Parametrierung der Busteilnehmer-Einrichtung denkbar, insbesondere eine Ethernet-Schnittstelle.

Die Busteilnehmer-Einrichtung kann an dem Datenbus entweder als Slave mit Bus-Off Master oder als Slave mit passivem Master oder als Slave mit aktivem Master fungieren. Ein als Bus-Off Master eingestellter Master ist als vom Bus getrennter Master zu verstehen. Die Betriebsart als reiner Slave wird vorzugsweise ausgeführt, wenn die Master-Einheit der Busteilteilnehmer-Einrichtung defekt ist.

Mit der Busteilnehmer-Einrichtung befindet sich ein Kommunikationsteilnehmer in dem Netz, der mit der davon umfassten Master-Einheit in der Lage ist, bei einem Ausfall des bisherigen Busmasters dessen Funktion zu übernehmen. Die dafür notwendige Überwachung des Datenverkehrs am Bus kann durch die Slave-Einheit und/oder die Master Einheit der Busteilnehmer-Einrichtung erfolgen, wobei die Master-Einheit Daten auf dem Bus mitliest. Die Slave-Einheit wird damit zur Kontrollinstanz am Datenbus. Diese Funktion kann alternativ oder zusätzlich von der Master-Einheit übernommen werden. Entsprechende Überwachungsergebnisse werden gegebenenfalls von der Master-Einheit zu der Slave-Einheit kommuniziert.

Es sei darauf hingewiesen, dass das in dieser Patentanmeldung angegebene Verfahren auch entsprechend der abhängigen Vorrichtungsansprüche weitergebildet sein kann und umgekehrt.

In einer Ausführungsform der Busteilnehmer-Einrichtung umfasst deren Slave-Einheit Mittel zur Überwachung einer Zeitspanne zwischen einem Eingang eines Datentelegramms und einem Eingang eines unmittelbar darauffolgenden Datentelegramms sowie Mittel zum Vergleich der jeweiligen Zeitspanne mit einem vorgegebenen oder vorgebbaren Grenzwert. Im Falle einer Überschreitung des Grenzwerts ist mittels der Slave-Einheit die Aktivierung der Master-Einheit bewirkbar. Die Überwachung der Übertragung von Datentelegrammen über den Datenbus erfolgt nach Art eines Watchdogs. Mittels einer solchen Überwachung ist ein Ausfall des Busmasters anhand eines Ausbleibens der üblicherweise regelmäßig, insbesondere zeitlich äquidistant eingehenden Datentelegramme erkennbar.

In einer weiteren Ausführungsform der Busteilnehmer-Einrichtung umfasst diese einen mittels der Slave-Einheit ansteuerbaren Funktionswechsler. Mittels des Funktionswechslers ist als Reaktion auf ein Umschaltsignal von der Slave-Einheit im Zuge der Aktivierung der Master-Einheit eine Anschaltung an den Datenbus zum Lesen von dem Datenbus bewirkbar. Insbesondere ist zusätzlich mittels der Slave-Einheit eine Anschaltung der Master-Einheit an den Datenbus zum Schreiben bewirkbar. Unter einer Anschaltung wird hier das Herstellen einer Datenverbindung verstanden. Der Funktionswechsler ist vorzugsweise mittels der Slave-Einheit ansteuerbar. Er kann verschiedene Arten der Durchschaltung des Datenbusses zu der Slave-Einheit und der Master-Einheit und somit die Realisierung verschiedener Betriebsarten der Busteilnehmer-Einrichtung bewirken. Der Funktionswechsler legt zumindest einen Teil der internen Kommunikationspfade der Busteilnehmer-Einrichtung fest.

Die Master-Einheit kann bereits vor ihrer vollständigen Aktivierung zum Lesen an den Datenbus angeschaltet sein. Dann erfolgt mittels des Funktionswechslers als Reaktion auf das Umschaltsignal der Slave-Einheit die vollständige Anschaltung der Master-Einheit an den Datenbus einschließlich der Möglichkeit, auf den Datenbus zu schreiben. Wenn die Master-Einheit bisher nicht an den Datenbus angeschaltet ist, erfolgt mittels des Funktionswechslers als Reaktion auf das Umschaltsignal der Slave-Einheit die Anschaltung der Master-Einheit an den Datenbus.

In einer Ausführungsform der Busteilnehmer-Einrichtung sind mittels des Funktionswechslers alternativ entweder in einem ersten Schaltmodus die Slave-Einheit ohne Master an den Datenbus anschaltbar. In einem zweiten Schaltmodus sind die Slave-Einheit und die nur zum Lesen angeschaltete Master-Einheit an den Datenbus anschaltbar. In einem weiteren, dritten Schaltmodus sind die Slave-Einheit und die aktive Master-Einheit zum Lesen und zum Schreiben in Reihe an den Datenbus anschaltbar.

Der zweite Schaltmodus ermöglicht eine Anschaltung der Master-Einheit nur zum Lesen an den Datenbus. Auf diese Weise kann die Master-Einheit, ohne die Funktion als Busmaster zu übernehmen, den Datenverkehr am Datenbus kontinuierlich mithören. So kann ein passiver Master Daten bereithalten, die auch der aktive Busmaster hat, sodass ein Masterwechsel problemloser durchführbar ist. Insbesondere sendet der Master dazu Daten, die seinen Zustand betreffen. Eine bei redundanten Mastern in einem Netzwerk nach dem Stand der Technik erforderliche direkte Verbindung der Master über einen anderen Pfad als den herkömmlichen Datenbus ist auf diese Weise nicht notwendig.

Nach einem Masterwechsel ergibt sich eine neue Anordnung der Busteilnehmer an dem Datenbus in Bezug auf den neuen Master. Weil sich die Laufzeiten von dem neuen Master zu den anderen Busteilnehmern durch den Masterwechsel verändern, müssen die Teilnehmer neu miteinander synchronisiert werden. Die Laufzeiten zwischen einzelnen Busteilnehmern können vorgegeben und gespeichert sein. Sie können alternativ oder zusätzlich während eines Betriebs ermittelt werden. Mit Hilfe dieser bekannten Daten können die Laufzeitverzögerungen zwischen dem neuen Master und den anderen Teilnehmern berechnet werden. Dazu können die Laufzeiten zwischen einzelnen Busteilnehmern so addiert werden, dass sich eine Laufzeit zwischen einem Teilnehmer und dem neuen Master ergibt. Durch die Berechnung dieser Werte kann ein schnellerer Masterwechsel vollzogen werden. Insbesondere werden die neuen Laufzeiten zum Master schon vor dem Masterwechsel berechnet oder parametriert. Nach einer solchen Neusynchronisation kann ein Laufzeitausgleich nach bekannten Verfahren erfolgen. Insbesondere wird dabei eine Verschiebung der Synchronisation um wenige Nanosekunden berücksichtigt. Die Synchronisation kann dadurch erfolgen, dass von einem Busteilnehmer, insbesondere dem aktiven Busmaster, eine Referenzzeit auf den Datenbus geschrieben wird und die anderen Busteilnehmer ihre Zeit an die empfangene Zeit plus die jeweilige Laufzeit anpassen.

Außerdem kann die Slave-Einheit mit dem Datenbus zum Empfangen und Senden in eine Vorwärtsrichtung und in eine Rückwärtsrichtung verbunden oder verbindbar sein. Dies kann für einen Betrieb der Busteilnehmer-Einrichtung an einem Bus mit einer Strang-Architektur vorteilhaft sein, wobei zumindest der betreffende Zweig, in dem sich die Busteilnehmer-Einrichtung befindet, nicht zu einem Ring geschlossen ist. Es kann jedoch auch sinnvoll sein, eine solche Teilnehmer-Einrichtung in einer ringförmigen Architektur vorzusehen, weil diese durch einen Ausfall eines Teilnehmers unter Umständen aufgetrennt werden kann. Dann kann der Betrieb an der sich ergebenden Strang-Architektur fortgesetzt werden. Dazu kann der Slave einen doppelten Satz von Sende- und Empfangsports aufweisen. Mit den beiden Schnittstellen der Busteilnehmer-Einrichtung kann jeweils ein Sendeport und ein Empfangsport der Slave-Einheit verbunden oder verbindbar sein.

Dann kann der Slave auf jeder der Schnittstellen der Busteilnehmer-Einrichtung senden und empfangen, sodass eine Durchleitung von Daten durch die Busteilnehmer-Einrichtung in einer Vorwärtsrichtung und in einer Rückwärtsrichtung möglich ist. Dadurch wiederum ist es möglich, in einer nicht ringförmigen Busarchitektur Datentelegramme von der Busteilnehmer-Einrichtung aus in beide Richtungen über den Bus zu senden.

Wenn nur die Slave-Einheit an den Bus geschaltet ist (erster Schaltmodus), ist der Funktionswechsler der Busteilnehmer-Einrichtung vorzugsweise derart geschaltet, dass Datentelegramme durch den Slave laufen. Dabei können sie, wenn sie in der Vorwärtsrichtung laufen, von einer als Empfangsschnittstelle der Busteilnehmer-Einrichtung arbeitenden Schnittstelle zu einem internen Empfangsport der Slave-Einheit, durch den Slave hindurch zu einem internen Sendeport der Slave-Einheit und von dort zu einer Schnittstelle der Busteilnehmer-Einrichtung laufen, die als Sendeschnittstelle arbeitet. Wenn ein Datentelegramm in Rückwärtsrichtung durch die Busteilnehmer-Einrichtung laufen soll, um die Betriebsrichtung des Busses zu ändern, kann der Funktionswechsler die bisher als Empfangsschnittstelle arbeitenden Schnittstelle der Busteilnehmer-Einrichtung mit dem Sendeport der Slave-Einheit und den Sendeport der Busteilnehmer-Einrichtung mit dem Empfangsport der Slave-Einheit zusammenschalten. Dann kann ein Datentelegramm von der Schnittstelle der Busteilnehmer-Einrichtung, die in Vorwärtsrichtung als Sendeschnittstelle dient, empfangen werden und zu einem Empfangsport der Slave-Einheit, weiter durch den Slave laufen und schließlich zu der Schnittstelle der Busteilnehmer-Einrichtung laufen, die in Vorwärtsrichtung als Empfangsschnittstelle dient.

Wenn zusätzlich die passive Master-Einheit zum Lesen an den Bus geschaltet ist (zweiter Schaltmodus), so kann der passive Master an einer beliebigen Abgriffstelle auf den Datenfluss durch die Busteilnehmer-Einrichtung zugreifen. Dazu ist ein interner Empfangsport der Master-Einheit mit der Abgriffstelle verbunden.

Wenn die Busteilnehmer-Einrichtung als aktiver Busmaster arbeitet (dritter Schaltmodus), ist darin in Bezug auf den Datenfluss durch die Busteilnehmer-Einrichtung in einer ersten Schaltvariante des Funktionswechslers eine der beiden Schnittstellen der Teilnehmer-Einrichtung jeweils mit einem Sendeport und einem Empfangsport der Slave-Einheit verbunden, wobei jeweils einer dieser Ports aktiv und einer passiv ist. Mit einem zweiten Satz von Sende- und Empfangsports ist die Slave-Einheit mit der Master-Einheit verbunden und kann auf diese Weise Daten von dem Datenbus zu der Master-Einheit weiterleiten und Daten von der Master-Einheit auf den Datenbus geben. Diese Variante ist besonders für den Betrieb an einem Datenbus geeignet, der als geschlossener Ring ausgeführt ist.

In einer alternativen Schaltvariante für den dritten Schaltmodus können intern die Slave-Einheit und die Master-Einheit für eine Übertragungsrichtung von Datentelegrammen durch die Busteilnehmer-Einrichtung in Reihe geschaltet sein. Diese Variante ist besonders für den Betrieb an einem offenen Ring oder Strang geeignet. Wenn die Busteilnehmer-Einrichtung in dieser Richtung arbeitet, können von der Master-Einheit Datentelegramme an die Slave-Einheit gesendet werden. Diese Daten werden am Empfangsport der Slave-Einheit empfangen und laufen nach einer Durchleitung durch die Slave-Einheit über dessen Sendeport zu der Schnittstelle der Busteilnehmer-Einrichtung, die als Sendeschnittstelle arbeitet. Sie durchlaufen dann einen Strangabschnitt des Datenbusses bis zu dessen offenem Ende und werden von dort zu der Busteilnehmer-Einrichtung zurückgesendet, wobei deren zuvor als Sendeschnittstelle betriebene Schnittstelle nun als Empfangsschnittstelle arbeitet. Eine der in dieser Schaltvariante vorliegenden Verschaltung bewirkt für so in Gegenrichtung ankommende Daten , dass nur die Slave-Einheit an der Weiterleitung beteiligt ist, welche die Daten von der Schnittstelle, die in der Gegenrichtung als Empfangsschnittstelle arbeitet, zu der jetzt als Sendeschnittstelle der Busteilnehmer-Einrichtung wirkenden Schnittstelle durchleitet Diese ist mit dem zweiten Strangabschnitt des Datenbusses zwischen der Busteilnehmer-Einrichtung und dem einem zweiten Ende des Datenbusses verbunden. An diesem Ende werden Daten in die ursprüngliche Übertragungsrichtung zurück zu der Busteilnehmer-Einrichtung gesendet, an der sie an der Schnittstelle der Busteilnehmer-Einrichtung ankommen, von der sie zuletzt gesendet wurden, und die nun als Empfangsschnittstelle arbeitet. Von dort werden die Daten zum Empfangsport der Master-Einheit geleitet und hier insbesondere verarbeitet. Um die genannte Funktionalität erreichen zu können, weist die Slave-Einheit einen doppelten Satz von Sendeports und Empfangsport auf (Medienredundanz).

In einer Variante können die Slave Einheit-und die Master-Einheit jeweils einen doppelten Satz von Empfangsports und Sendeports aufweisen. Dann kann jeweils ein Empfangsport und ein Sendeport der Master-Einheit und der Slave-Einheit mit jeder Schnittstelle der Busteilnehmer-Einrichtung verbunden sein. Intern sind die Master-Einheit und die Slave-Einheit über die verbleibenden internen Ports bidirektional verbunden. Dann kann für die Durchleitung in Vorwärts- bzw. Rückwärtsrichtung entschieden werden, über welchen ihrer Ports die Master-Einheit und die Slave-Einheit empfangen bzw. senden sollen und in welche Richtung die interne Kommunikation zwischen der Master-Einheit und der Slave-Einheit laufen soll.

Die Erfindung kann insbesondere für Einrichtungen eingesetzt werden, in denen eine hohe Verfügbarkeit erforderlich ist.

Einzelne Aspekte der hier eingereichten Beschreibung lassen sich kurz wie folgt zusammenfassen:
1. Für die Realisierung einer Masterredundanz Verwendung eines Hybriden bestehend aus Standard-Master- und Standard-Slave-Komponenten mit einer Umschaltlogik.
2. Überwachung und sichere hardwaremäßige Abschaltung des gestörten aktiven Masters durch den lokalen Slave, der eine Überwachungsfunktionalität hat.
3. Aktivierung eines passiven Masters durch den lokalen Slave nach Ausfall des aktiven Masters.
4. Informationen für Umschaltungen werden aus dem Informationsfluss des Busses selbst gewonnen.
5. Der lokale Slave des aktiven Masters kann als Referenzuhr dienen. Durch eine Umschaltlogik im Funktionswechsler können die Teilnehmer des Netzes auch nach Wechsel des Masters ohne Zusatzaufwand synchron bleiben.

Nachfolgend wird ein Ausführungsbeispiel der Erfindung anhand der Zeichnungen näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung durchaus auch Änderungen und Modifikationen möglich, insbesondere solche Varianten und Kombinationen, die zum Beispiel durch Abwandlung oder Kombination von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: ein Netzwerk mit über einen Datenbus kommunikativ verbundenen Busteilnehmern,
- Fig. 2: ein Layout eines nach einem Summenrahmenverfahren über den Datenbus übertragenen Datentelegramms,
- Fig. 3: eine Busteilnehmer-Einrichtung der hier vorgeschlagenen Art mit einer davon umfassten Master-Einheit und einer ebenfalls davon umfassten Slave-Einheit,
- Fig. 4: ein Netzwerk gemäß Fig. 1 mit zumindest zwei darin als Kommunikationsteilnehmer fungierenden Busteilnehmer-Einrichtungen und den Laufzeiten zwischen den Busteilnehmern gemäß Fig. 3,
- Fig. 5: die Busteilnehmer-Einrichtung gemäß Fig. 3 mit weiteren Details, speziell einem von der Busteilnehmer-Einrichtung umfassten Funktionswechsler ohne Medienredundanz des Slaves,
- Fig. 6: den Funktionswechsler mit einem im Vergleich zu Fig. 5 anderen Schaltzustand,
- Fig. 7: eine Busteilnehmer-Einrichtung gemäß Fig 3, bei der die Slave-Einheit mit einem doppelten Satz von Empfangs- und Sendeports ausgestattet ist, wobei die Slave-Einheit zum Durchleiten von Datentelegrammen in Vorwärts- und Rückwärtsrichtung und die Master-Einheit zum Lesen geschaltet ist,
- Fig. 8: eine Busteilnehmer-Einrichtung gemäß Figur 7, bei der die Slave-Einheit zum Senden und Empfangen in eine Richtung geschaltet ist und
- Fig. 9: eine Busteilnehmer-Einrichtung gemäß Figur 7, bei der die Slave-Einheit und die Master-Einheit zum Senden und Empfangen in Vorwärts- und Rückwärtsrichtung geschaltet sind.

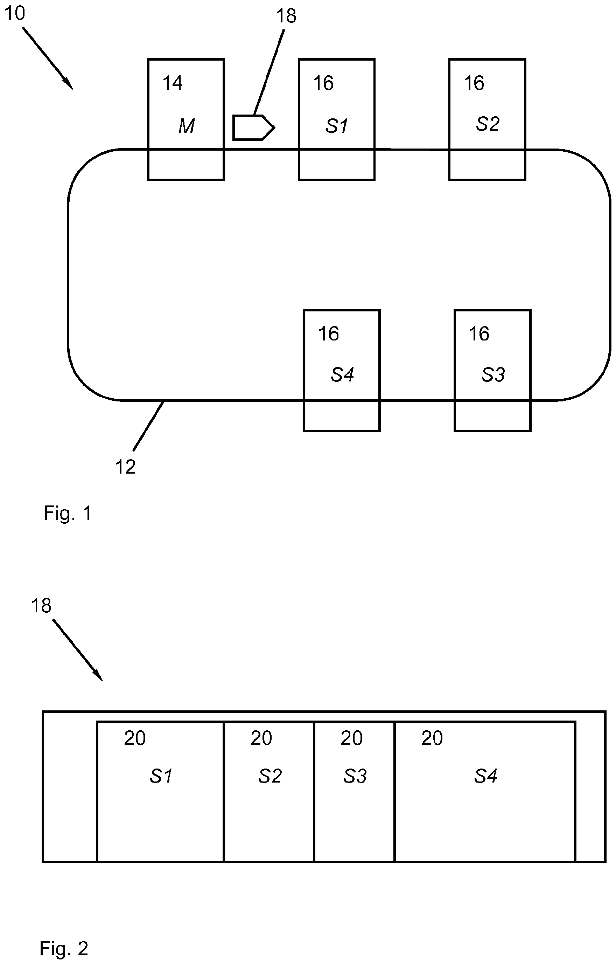

Die Darstellung in Figur 1 zeigt in schematisch vereinfachter Form ein Netzwerk 10 nach dem Stand der Technik mit untereinander über einen Datenbus 12 kommunikativ verbundenen Busteilnehmern, von denen einer als Busmaster (Master) 14 und die anderen als Slaves 16 fungieren. Der Master 14 und die Slaves 16 sind symbolisch zur weiteren Unterscheidung in der Darstellung auch mit "M" bzw. "S1", "S2", "S3" und "S4" bezeichnet. Die Kommunikation über den im Folgenden mitunter auch nur kurz als Bus 12 bezeichneten Datenbus 12 erfolgt mittels einzelner jeweils vom Master 14 ausgesandter und von den Slaves 16 empfangener Datentelegramme 18.

Die Darstellung in Figur 2 zeigt in schematisch vereinfachter Form ein Layout eines solchen im Folgenden mitunter auch nur kurz als Telegramm 18 bezeichneten Datentelegramms 18. Grundsätzlich ist der Aufbau eines nach einem Summenrahmenverfahren über den Bus 12 übertragenen Telegramms 18 bekannt, so dass insoweit auf die Fachliteratur verwiesen werden kann. Jedenfalls umfasst das Telegramm 18 für jeden an den Bus 12 angeschlossenen Slave 16 einen dem Slave 16 eindeutig zugeordneten Abschnitt 20. Darüber hinaus kann ein Telegramm 18 auch nur Abschnitte 20 für eine Teilmenge der angeschlossenen Slaves 16 beinhalten. Im Grenzfall umfasst jedes Telegramm genau einen Abschnitt 20 für genau einen Slave 16 enthalten. Das Datentelegramm kann zusätzlich Steuerinformationen umfassen.

Ein vom Master 14 ausgesandtes Telegramm 18 wird von jedem an den Bus 12 angeschlossenen Slave 16 empfangen. Jeder Slave 16 entnimmt aus dem dabei bei ihm vorbeifließenden Datenstrom aus dem ihm zugeordneten Abschnitt 20 die für ihn bestimmten Eingangsdaten und kopiert seine Ausgangsdaten in einen dafür vorgesehenen Bereich seines Abschnitts 20. Das gegebenenfalls modifizierte Telegramm 18 wird dann an den nachfolgen Slave 16 weitergeleitet (Hop-to-Hop-Verfahren) oder zurückgeschickt. Letzteres ist untenstehend an einem Beispiel erläutert.

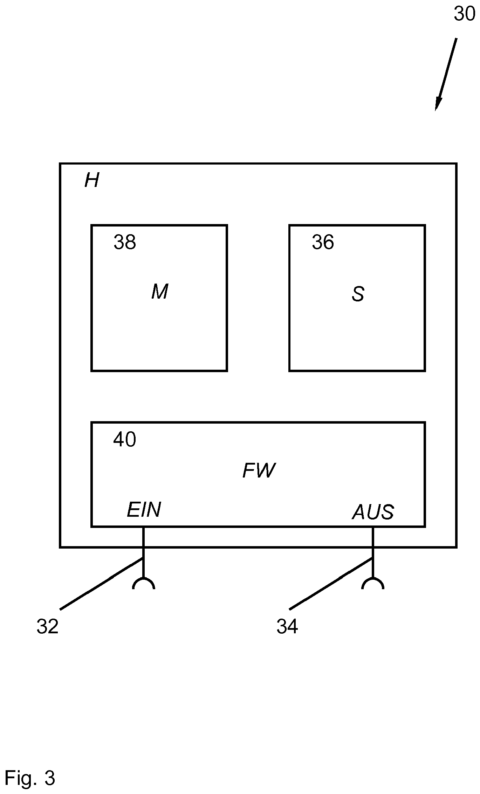

Die Darstellung in Figur 3 zeigt in schematisch vereinfachter Form eine Ausführungsform einer Busteilnehmer-Einrichtung 30 gemäß dem hier vorgestellten Ansatz. Die Busteilnehmer-Einrichtung 30 ist zum Betrieb an einem seriellen Datenbus 12 gemäß Figur 1 bestimmt und eingerichtet und umfasst dafür Mittel zum Anschluss an einen solchen Datenbus 12 sowie zum Empfangen eines nach einem Hop-to-Hop-Verfahren über den Datenbus 12 übertragenen Datentelegramms 18.

Die genannten Mittel sind dabei eine Schnittstelle 32 und eine Schnittstelle 34. Zu den Mitteln zum Empfangen eines nach einem Hop-to-Hop-Verfahren über den Datenbus 12 übertragenen Datentelegramms 18 gehört aber auch eine von der Busteilnehmer-Einrichtung 30 umfasste Slave-Einheit 36 (symbolisch mit "S" bezeichnet). Mittels der Slave-Einheit 36 fungiert die Busteilnehmer-Einrichtung 30 an dem Datenbus 18 bei korrekt arbeitendem Master 14, also in einem Normalbetrieb, als Slave 16 (Figur 1). Neben der Slave-Einheit 36 umfasst die Busteilnehmer-Einrichtung 30 auch eine zuschaltbare Master-Einheit 38 (symbolisch mit "M" bezeichnet).

Mittels der Slave-Einheit 36, durch die die Busteilnehmer-Einrichtung 30 an dem Datenbus 12 im Normalbetrieb als Slave 16 fungiert, ist eine Übertragung von Datentelegrammen 18 über den Datenbus 12 überwachbar.
In Abhängigkeit von einem Ergebnis der Überwachung ist mittels der Slave-Einheit 36 eine Aktivierung der von der Busteilnehmer-Einrichtung 30 umfassten Master-Einheit 38 bewirkbar. Im Betrieb erfolgt in Abhängigkeit vom Überwachungsergebnis gegebenenfalls eine solche Aktivierung. Nach einer solchen Aktivierung fungiert die Busteilnehmer-Einrichtung 30 an dem Datenbus 12 mit ihrer Master-Einheit 38 als Master für den Datenbus 12 und in Serie mit ihrer Slave-Einheit 36 weiterhin als Slave 16.
Weil die Busteilnehmer-Einrichtung 30 damit an dem Datenbus 12 entweder als Slave 16 mit Bus-Off Master oder als Slave 16 mit passiven Master 14 oder als Slave 16 mit aktivem Master 14 fungieren kann, wird die Busteilnehmer-Einrichtung 30 im Folgenden mitunter auch kurz nur als Hybrid 30 (symbolisch "H") bezeichnet. Zum Anschalten der Slave-Einheit 36 und/oder der Master-Einheit 38 an den Datenbus 12 umfasst die Busteilnehmer-Einrichtung 30 (der Hybrid 30) eine im Folgenden mitunter auch nur kurz als Funktionswechsler 40 bezeichnete Funktionswechsler-Einheit 40 (symbolisch: "FW").

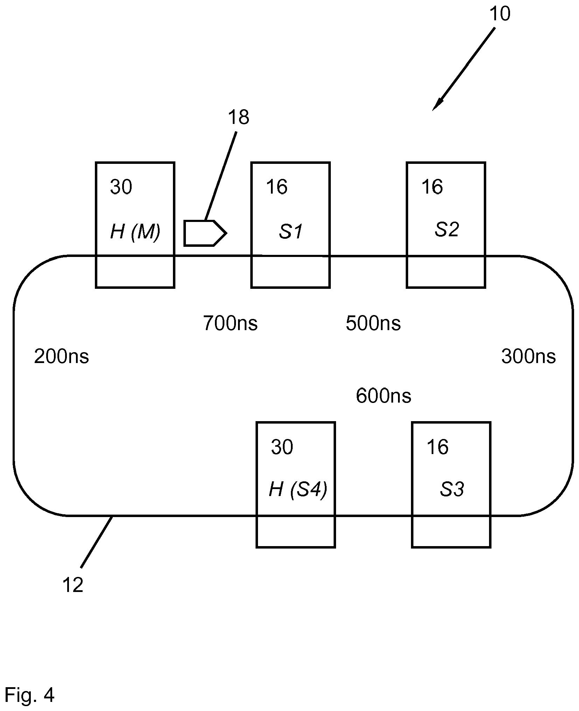

Die Darstellung in Figur 4 ist im Wesentlichen eine Wiederholung der Darstellung in Figur 1, so dass auf die dortigen Erläuterungen verwiesen wird. Im Unterschied zu der Darstellung in Figur 1 umfasst das Netzwerk 10 zwei Busteilnehmer-Einrichtungen 30 gemäß Figur 3, also einen ersten und einen zweiten Hybriden 30. Einer der Hybride 30 fungiert, zum Beispiel aufgrund einer entsprechenden Konfiguration, am Bus 12 als Master 14 (symbolisch: "H (M)"). Der andere Hybrid 30 fungiert am Bus 12 als Slave (symbolisch: "H (S4)"). Der als aktiver Master 14 fungierende Hybrid 30 arbeitet am Bus 12 im Normalbetrieb wie ein "normaler" Master 14 (Figur 1) und ist für die anderen Kommunikationsteilnehmer normalerweise nicht von einem normalen Master 14 unterscheidbar. Der im Normalbetrieb als Slave 16 fungierende Hybrid 30 erscheint am Bus 12 für alle anderen Kommunikationsteilnehmer wie ein "normaler" Slave 16 und ist damit ebenfalls nicht von einem normalen Slave 16 unterscheidbar. Die Anzahl der Hybride 30 am Bus 12 ist grundsätzlich nicht beschränkt. Des Weiteren ist auch nicht notwendig erforderlich, dass an den Bus 12 zwei Hybride 30 angeschlossen sind. Die Masterfunktion kann grundsätzlich auch ein "normaler" Master 14 (Fig. 1) übernehmen. Indem an den Bus 12 zumindest ein Hybrid 30 angeschlossen ist, steht die Master-Einheit 38 des Hybriden 30 im Fall eines Ausfalls oder einer Fehlfunktion des Masters 14 oder eines als Master fungierenden Hybrids 30 als redundanter Master 14 zur Verfügung. Indem der Hybrid 30, nämlich dessen Master-Einheit 38, im Fehlerfall die Masterfunktion übernimmt, ist der weitere Betrieb des Netzwerks 10 gewährleistet.

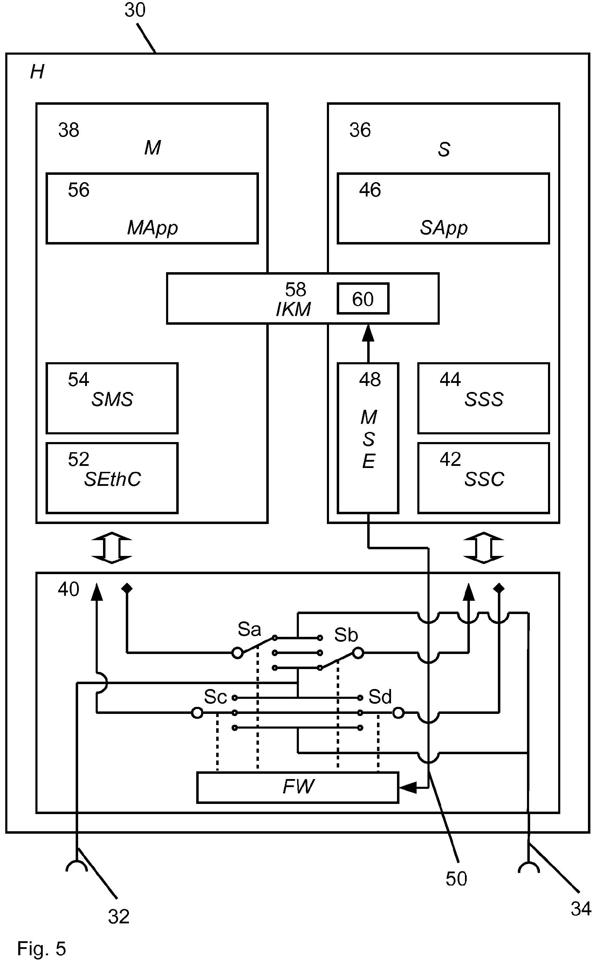

Ein am Bus 12 zunächst (nur) als Slave 16 fungierender Hybrid 30 überwacht in einer für die anderen Kommunikationsteilnehmer transparenten Art und Weise die Übertragung von Datentelegrammen 18 über den Datenbus 12. Dazu zeigt die Darstellung in Figur 5 den Hybrid 30 gemäß Figur 3 mit weiteren Details.

Die Slave-Einheit 36 umfasst zunächst einen grundsätzlich an sich bekannten Slave-Controller 42 (symbolisch: "SSC" für "Standard Slave-Controller") sowie einen ebenfalls grundsätzlich an sich bekannten Slave-Stack 44 (symbolisch: "SSS" für "Standard Slave-Stack"). Damit ist eine Übernahme von Daten aus einem beim Hybriden 30 - in seiner Funktion als Slave 16 - eingehenden Telegramm 18 sowie eine Übergabe von Daten in ein solches Telegramm 18 möglich. Dies ist in der Darstellung durch den doppelten Blockpfeil von und zur Slave-Einheit 36 veranschaulicht.

Die jeweilige Funktion der Slave-Einheit 36 ist durch ein Steuerprogramm 46 (symbolisch: "SApp") bestimmt, das in einen dafür vorgesehenen und nicht separat gezeigten Speicher der Slave-Einheit 36 geladen ist. Das Steuerprogramm 46 des Slaves (Applikation 46) legt die Slave-Funktion der Busteilnehmer-Einrichtung 30 fest. Das Steuerprogramm 46 kann auf die als Eingangsdaten aus dem Telegramm 18 zu übernehmenden Daten zugreifen und die als Ausgangsdaten an das Telegramm 18 zu übergebenden Daten bereitstellen.

Abweichend von einem "normalen" Slave 16 umfasst die Slave-Einheit 36 des Hybriden 30 eine Master-Steuereinheit 48 (symbolisch: "MSE" für "Master-Steuereinheit"), die im Folgenden mitunter auch nur kurz als Steuereinheit 48 bezeichnet ist. Mittels dieser Master-Steuereinheit 48 erfolgt die bereits erwähnte Überwachung der Übertragung von Telegrammen 18 über den Bus 12 durch die Slave-Einheit 36. In Abhängigkeit vom Ergebnis der Überwachung erfolgt mittels der Steuereinheit 48 - und damit durch die die Steuereinheit 48 umfassende Slave-Einheit 36 - eine Aktivierung der von der Busteilnehmer-Einrichtung 30 umfassten Master-Einheit 38, indem mittels der Steuereinheit 48 der Funktionswechsler 40 im Sinne einer solchen Aktivierung angesteuert wird. Für eine solche Aktivierung erzeugt die Steuereinheit 48 ein Umschaltsignal 50, das die Aktivierung bewirkt oder zumindest einleitet.

Der Bus 12 verläuft in dem Hybriden 30 von einer Schnittstelle 32 zu einer Schnittstelle 34, wobei der Bus 12 durch den Funktionswechsler 40 verläuft. In dem Funktionswechsler verläuft der Datenbus 12 in der gezeigten Ausführungsform über vier Schalter Sa, Sb, Sc und Sd, mit denen zwischen dem ersten, dem zweiten und dem dritten Schaltmodus umgeschaltet werden kann.

Mittels der gezeigten Ausführungsform des Funktionswechslers 40 ist eine Anschaltung von nur der Slave-Einheit 36, wobei der Master vom Bus abgetrennt ist (Bus-Off Master, erster Schaltmodus) oder eine Anschaltung von der passiven Master-Einheit 38 nur zum Lesen und der Slave-Einheit 36 (zweiter Schaltmodus) oder eine gleichzeitige Anschaltung der Slave-Einheit 36 und der aktiven Master-Einheit 38 zum Lesen und zum Schreiben und in Reihe (dritter Schaltmodus) an den Bus 12 möglich. Demnach verfügt der Funktionswechsler 40 über zumindest drei Schaltmodi, nämlich einen ersten, zweiten und dritten Schaltmodus.

Im ersten Schaltmodus ist nur die Slave-Einheit 36 des Hybriden 30 an den Bus 12 angeschaltet und der Master ist Bus-Off geschaltet. Die Busteilnehmer-Einrichtung 30 arbeitet in einem Slave-Betrieb im normalen Busbetrieb ausschließlich als Slave. Die Schnittstellen 32 und 34 der Busteilnehmer-Einrichtung haben für eine Standardbetriebsrichtung an einem ringförmigen Datenbus jeweils nur eine Funktion, nämlich entweder als Sendeschnittstelle oder als Empfangsschnittstelle.

Im zweiten Schaltmodus ist die Master-Einheit 38 des Hybriden 30 passiv an den Bus 12 angeschaltet, d.h. zum Lesen mit dem Datenbus verbunden. Die Master-Einheit 38 kann somit den Verkehr auf dem Datenbus 12 mitlesen. So kann sie Daten empfangen, die sie zumindest teilweise, bevorzugt wenigstens näherungsweise auf den Informationsstand wie der aktive Busmaster 14 bringen. Der aktive Busmaster kann Daten mit Informationen über seinen Zustand senden. Die Schnittstellen 32 und 34 der Busteilnehmer-Einrichtung haben für eine Standardbetriebsrichtung an einem ringförmigen Datenbus jeweils nur eine Funktion, nämlich entweder als Sendeschnittstelle oder als Empfangsschnittstelle.

Im dritten Schaltmodus ist die Slave-Einheit 36 zum Lesen und zum Schreiben und aktive Master-Einheit 38 des Hybriden 30 nur zum Lesen in Reihe zu der Slave-Einheit 36 an den Bus 12 angeschaltet. Die Schnittstellen 32 und 34 der Busteilnehmer-Einrichtung können jeweils als Sendeschnittstelle oder als Empfangsschnittstelle arbeiten, sodass ein bidirektionaler Betrieb der Busteilnehmer-Einrichtung möglich ist.

Die Darstellung in Figur 5 zeigt den Funktionswechsler 40 im dritten Schaltmodus (3), in dem die Slave-Einheit 36 und die Master-Einheit 38 in Reihe an den Bus 12 angeschaltet sind. Dabei sind die Slave-Einheit 36 und die Master-Einheit 38 derart über die Schnittstellen 32, 34 an den Datenbus 12 angeschlossen, dass beide Einheiten 36, 38 eingehende Telegramme 18 empfangen können. Die Slave-Einheit 36 kann ein eingegangenes Telegramm 18 weiterleiten. Die Master-Einheit 38 kann ein eigenes Telegramm 18 senden. Das Empfangen erfolgt dabei über den Anschluss der jeweiligen Einheit 36, 38 an die Schnittstelle 32. Das Weiterleiten bzw. Senden erfolgt über den Anschluss der jeweiligen Einheit 36, 38 an die Schnittstelle 34. Dies entspricht dem symbolisch in Figur 5 gezeigten Schaltzustand des Funktionswechslers 40.

Im zweiten Schaltmodus sind die Slave-Einheit 36 und die Master-Einheit 38 so an den Datenbus 12, nämlich die Schnittstellen 32, 34, angeschlossen, dass beide Einheiten 36, 38 eingehende Telegramme 18 empfangen können. Die Slave-Einheit 36 kann ein eingegangenes Telegramm 18 weiterleiten, während die Master-Einheit 38 selbst nicht senden kann. Die Slave-Einheit 36 ist an die Schnittstellen 32, 34 angeschlossen, während die Master-Einheit 38 nur an die Schnittstelle 32 angeschlossen ist. Mittels einem Zustand des Funktionswechslers 40 wird bewirkt, dass eine der Einheiten 36, 38 des Hybriden 30 an eine der Schnittstellen 32, 34 angeschlossen ist, wobei die jeweilige Schnittstelle 32, 34 auf die jeweilige Einheit 36, 38 durchgeschaltet ist. Dazu sind die Schalter des Funktionswechslers 40 in eine entsprechende Schaltstellung gebracht.

Bei der Reihenschaltung der Slave-Einheit 36 und der Master-Einheit 38 im zweiten Schaltmodus empfängt nicht nur die Slave-Einheit 36, sondern auch die Master-Einheit 38 des Hybriden 30 jedes über den Bus 12 übertragene Telegramm 18. Die Master-Einheit 38 hört damit gewissermaßen den Datenverkehr über den Bus 12 mit. Der Busmaster 14 kann spezielle Daten senden, die z.B. seinen Zustand betreffen. Damit verfügt der passive Master im Ergebnis teilweise oder zumindest näherungsweise und bevorzugt stets über den gleichen Datenbestand wie der derzeitige Busmaster 14. Auf diese Weise ist gewährleistet, dass die Master-Einheit 38 im Falle eines Ausfalls des Busmasters 14 die Funktion des Busmasters 14 nahezu stoßfrei übernehmen kann. Zum Mithören des Datenverkehrs über den Bus 12 sowie zum Senden und Empfangen von Telegrammen 18 als Busmaster 14 umfasst die Master-Einheit 38 einen an sich bekannten Ethernet-Controller 52 (symbolisch: "SEthC" für "Standard Ethernet-Controller") sowie einen ebenfalls an sich bekannten Master-Stack 54 (symbolisch: "SMS" für "Standard Master-Stack"). Die jeweilige Funktion der Master-Einheit 38 ist durch ein Steuerprogramm 56 (symbolisch: "MApp") bestimmt, das in einen dafür vorgesehenen und nicht separat gezeigten Speicher der Master-Einheit 38 geladen ist. Das Steuerprogramm 56 (die Applikation 56) sendet, wenn der Hybrid 30 (auch) als Master 14 am Bus 12 arbeitet, das jeweilige Telegramm 18. Bei einem Empfang eines Telegramms 18 wertet der Hybrid 30 die in dem Telegramm 18 von den Slaves 16 eingetragenen Daten aus. Im zweiten Schaltmodus fungiert der Hybrid 30 am Bus 12 nur als Slave, wobei die Applikation 56 bei einer Schaltstellung des Funktionswechslers 40, die der Master-Einheit 38 das Mithören des Datenverkehrs über den Bus 12 erlaubt, die in den mitgehörten Telegrammen 18 von den Slaves 16 eingetragenen Daten auswertet.
Die Datenübertragung von und zu der Master-Einheit ist in der Figur 5 durch den doppelten Blockpfeil zwischen dem Funktionswechsler und der Master-Einheit 38 veranschaulicht.
Die Master-Steuereinheit 48 fungiert als Mittel für die bereits erwähnte Überwachung der Übertragung von Telegrammen 18 über den Bus 12 durch die Slave-Einheit 36. Dabei fungiert die Steuereinheit 48 als Mittel zur Überwachung einer Zeitspanne zwischen einem Eingang eines Datentelegramms 18 und eines unmittelbar darauf folgenden Datentelegramms 18 sowie als Mittel zum Vergleich der jeweiligen Zeitspanne mit einem vorgegebenen oder vorgebbaren Grenzwert. Mittels der Steuereinheit 48 - und damit mittels der Slave-Einheit 36, von der sie umfasst ist - ist im Falle einer Überschreitung des Grenzwerts die interne Umschaltung des Hybriden 30 und die Aktivierung der lokalen Master-Einheit 38 bewirkbar. Die Steuereinheit 48 fungiert damit als Watchdog.
Als Mittel zum Vergleich der jeweiligen Zeitspanne mit dem Grenzwert kommt demnach zum Beispiel ein dekrementierender Zähler in Betracht, der jeweils bei einem Eingang eines Telegramms 18 auf einen dem Grenzwert entsprechenden Startwert gesetzt und gestartet wird und dessen Ablauf eine Überschreitung des Grenzwerts anzeigt. Auf diese Weise kann die Slave-Einheit 36 mittels ihrer Master-Steuereinheit 48 überwachen, ob der jeweilige Busmaster 14 regelmäßig Telegramme 18 auf den Bus 12 gibt. Wenn der Busmaster 14 ausfällt oder eine sonstige Fehlfunktion vorliegt, welche die regelmäßige Aussendung von Telegrammen 18 verhindert, wird dies mittels der Steuereinheit 48 automatisch erkannt. Als Reaktion auf die Erkennung einer Überschreitung des Grenzwerts wird automatisch das Umschaltsignal 50 ausgegeben und die Umschaltung bewirkt.

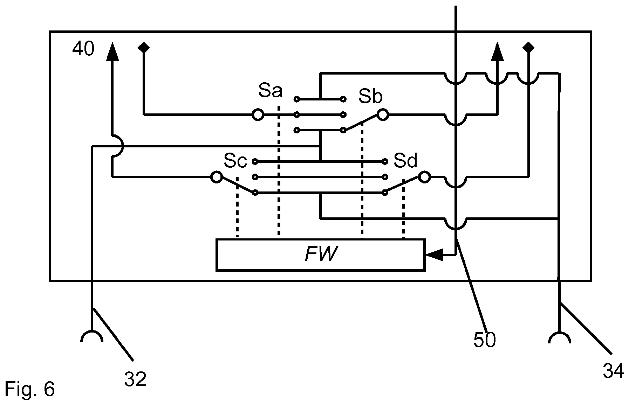

Um der Master-Einheit 38 ein aktives Senden von Telegrammen 18 zu ermöglichen, wird die Master-Einheit 38 zu der Schnittstelle 32 und der Schnittstelle 34 durchgeschaltet. Der Funktionswechsler 40 befindet sich dann in einem Schaltzustand, wie er in der Darstellung in Figur 5 gezeigt ist (dritter Schaltmodus). Solange die Master-Einheit 38 keine Sendeberechtigung hat und als passiver Master 14 den Datenverkehr über den Bus 12 nur mithört (zweiter Schaltmodus), befinden sich zum Beispiel die in Figur 5 symbolisch mit "Sc" und "Sd" bezeichneten Schalter abweichend von der dort gezeigten mittleren Schaltstellung in einer unteren Schaltstellung (so dass jedes von der Slave-Einheit 36 empfangene und dort gegebenenfalls modifizierte Telegramm 18 zur Master-Einheit 38 und gleichzeitig zu der Schnittstelle 34 gelangt) und der symbolisch mit "Sa" bezeichnete Schalter abweichend von der in Figur 5 gezeigten oberen Schaltstellung in einer mittleren Schaltstellung (so dass die Master-Einheit 38 nicht auf die Schnittstelle 34 durchgeschaltet ist).
Die resultierende Schaltstellung (zweiter Schaltmodus) des Funktionswechslers 40 ist in der Darstellung in Figur 6 gezeigt. Dabei ist darauf hinzuweisen, dass die Darstellung des Funktionswechslers 40 in Figur 5 und Figur 6 und die dort als einfache Schalter gezeigten Schaltelemente nur als symbolische Darstellung zur Illustration der Kommunikationspfade, der möglichen Umschaltvorgänge und (Schalt-)Zustände zu verstehen ist.

Wenn das Ergebnis der Überwachung, das mittels der Steuereinheit 48 ermittelt wird, einen Statuswechsel bedeutet, informiert die Steuereinheit 48 die Master-Einheit 38 direkt über den dort notwendigen Statuswechsel, nämlich über einen Statuswechsel von einem bisherigen passiven Status und dem bloßen Mithören von über den Bus 12 übermittelten Telegrammen 18 zu einem aktiven Status mit einer Übernahme der Funktion als Busmaster 14. Außerdem erzeugt die Steuereinheit 48 ein Umschaltsignal 50 zur Umschaltung des Funktionswechslers 40.
Dazu weist der Hybrid 30 ein Kommunikationsmittel 58 zum Ermöglichen einer direkten Kommunikation zwischen der Slave-Einheit 36 und der Master-Einheit 38 auf, insbesondere in Form eines für die Slave-Einheit 36 und für die Master-Einheit 38 zugänglichen Registers oder Speicherbereichs, Symbolisch - allerdings ohne Verzicht auf eine weitergehende Allgemeingültigkeit - ist das Kommunikationsmittel 58 in der Darstellung in Figur 5 mit IKM ("Internes Kommunikationsmittel") bezeichnet. Das Kommunikationsmittel 58 ist im einfachsten Fall ein einzelnes Bit einer Speicherzelle (Flag). Gegebenenfalls kann es auch eine mit den üblichen Zugriffskontrollen realisierte Mailbox sein kann. Grundsätzlich kann es sich bei dem Kommunikationsmittel 58 auch um verteilte Speicherbereiche handeln, nämlich einen Speicherbereich auf Seiten der Slave-Einheit 36 und einen Speicherbereich auf Seiten der Master-Einheit 38. Die Speicherinhalte oder einzelne Speicherbereiche können nach einem vorgegebenen Schema und insbesondere durch eine übergeordnete Einheit regelmäßig wechselseitig kopiert werden.

Die nachfolgende Beschreibung wird - ebenfalls ohne Verzicht auf eine weitergehende Allgemeingültigkeit - am Beispiel eines Internen Kommunikationsmittels 58 fortgesetzt, das die Form eines sowohl für die Slave-Einheit 36 wie auch für die Master-Einheit 38 zugänglichen Speicherbereichs hat. Zum Aktivieren der Master-Einheit 38 schreibt die Steuereinheit 48 einen vorgegebenen Wert in ein regelmäßig von der Master-Einheit 38 überwachtes Master-Kontrollregister 60. Der vorgegebene Wert - zum Beispiel "1" - signalisiert der Master-Einheit 38, dass ein Wechsel von dem bisher passiven Zustand in den aktiven Zustand erforderlich ist und dass die Master-Einheit 38 an dem Bus 12 die Funktion als Busmaster 14 übernehmen soll.

Sobald die Master-Einheit 38 im Zuge einer regelmäßigen Überwachung des Status des Master-Kontrollregisters 60 die Aufforderung zur Übernahme der Eigenschaft als Busmaster 14 erkennt, schaltet die Master-Einheit 38 intern um und fungiert fortan am Bus 12 als Master 14. Die Durchschaltung auf die Schnittstelle 34 und damit die Möglichkeit für die Master-Einheit 38, aktiv Telegramme 18 auf den Bus 12 geben zu können, erfolgt aufgrund der Umschaltung des Funktionswechslers 40. Aufgrund des bisherigen passiven Mithörens des Datenverkehrs über den Bus 12 verfügt die in Zukunft als Busmaster 14 fungierende Master-Einheit 38 über den dafür notwendigen Datenbestand. Die Aktivierung eines bisher passiven Masters ist unter dem Stichwort Master-Umschaltung oder Master-Redundanz an sich bekannt und insoweit scheinen hier keine weiteren Ausführungen erforderlich und es wird auf den diesbezüglichen Stand der Technik verwiesen.

Im Folgenden werden Möglichkeiten zur Kommunikation mit der von einem Hybrid 30 umfassten Master-Einheit 38 beschrieben. Dabei kommt es zunächst nicht darauf an, ob die Master-Einheit 38 passiv ist oder ob die Master-Einheit 38 am Bus 12 als Busmaster 14 fungiert. Weil sich die nachfolgende Beschreibung auch auf weitere an den Bus 12 angeschlossene Kommunikationsteilnehmer bezieht und die Kommunikation mit einem weiteren Hybrid 30 und einer davon umfassten Slave-Einheit 36 erfolgen kann, werden die Slave-Einheit 36, die zum selben Hybrid 30 gehört wie die Master-Einheit 38, mit der die Kommunikation erfolgen soll, als lokale Slave-Einheit 36, und ein entfernter Kommunikationsteilnehmer in Form einer von einem weiteren Hybrid 30 umfassten Slave-Einheit 36 als entfernte Slave-Einheit 36 bezeichnet.

Da eine passive und aktive Master-Einheit 38 am Bus 12 für die anderen Kommunikationsteilnehmer nicht sichtbar ist, kann vorgesehen sein, dass zur Übertragung von Daten an die passive und aktive Master-Einheit 38 diese zu übertragenden Daten im Rahmen einer Kommunikation mittels Austausch eines oder mehrerer Prozessdatenobjekte (PDO) oder Servicedatenobjekte (SDO) an die lokale Slave-Einheit 36 des Hybriden 30 adressiert werden. Dazu wertet die lokale Slave-Einheit 36 eingehende Prozessdatenobjekte oder Servicedatenobjekte aus und leitet darin für die Master-Einheit 38 bestimmte Daten direkt in einen Adressbereich eines Speichers der Master-Einheit 38 weiter oder liest von dort und leitet die Daten an den Bus 12 weiter. Dies können Kommandos an den passiven und aktiven Master sein, wie z.B. Bus-Off / Aktiv / Passiv. Über die Slave-Einheit 36 kann der passive und aktive Master auch Status-Informationen wie z.B. den Master-Status Bus-Off /Aktiv / Passiv und/ oder eine oder mehrere Fehlerzählerinformationen weitergeben.

Die lokale Slave-Einheit 36 fungiert in vielen Fällen als Zugangstür oder Relais zu einer passiven und aktiven Master-Einheit 38. Indem hierbei PDO- oder SDO-Kommunikation verwendet wird, können die Slave-Einheit 36 und die Master-Einheit 38 eines Hybriden 30 im Wesentlichen wie ein "normaler" Slave 16 bzw. ein "normaler" Master 14 ausgeführt sein, die insbesondere im Hintergrund über einen gemeinsamen Speicherbereich kommunizieren. Die Master-Einheit 38 kann auch über andersartige interne Kommunikation an die Slave-Einheit 36 angebunden sein, insbesondere über herkömmliche interne Bussysteme oder direkte, z.B. parallele Datenportverbindungen der Master-Einheit 38 und der Slave-Einheit 36.
Bei der Busteilnehmer-Einrichtung 30 ist vorgesehen, dass eine Slave-Einheit 36 im Rahmen einer Überwachung der Übertragung von Datentelegrammen 18 über den Bus 12 nicht nur - wie bisher beschrieben - die von derselben Busteilnehmer-Einrichtung 30 umfasste Master-Einheit 38 aktivieren kann, sondern eine aktive Master-Einheit 38 auch deaktivieren kann. Dies kann eine Master-Einheit 38 sein, die in derselben Busteilnehmer-Einrichtung 30 angeordnet sein kann, wie die abschaltende Slave-Einheit 36. Dies macht die hier vorgeschlagene Busteilnehmer-Einrichtung 30 und im Speziellen die davon umfasste Slave-Einheit 36 in noch stärkerem Maße zur Kontrollinstanz am Bus 12. Wenn im Folgenden in Bezug auf eine Slave-Einheit 36 sowie eine Master-Einheit 38 zum Ausdruck gebracht werden soll, dass es sich um die beiden von ein und derselben Busteilnehmer-Einrichtung 30 umfassten Einheiten 36, 38 handelt, wird die jeweilige Einheit 36, 38 im Folgenden als hybride Einheit 36, 38 bezeichnet. Ausgehend von einer Master-Einheit 38 ist die hybride Slave-Einheit 36 demnach die von derselben Busteilnehmer-Einrichtung 30, zu der auch die Master-Einheit 38 gehört, umfasste Slave-Einheit 36.

Ein denkbares Szenario für eine automatische Deaktivierung einer aktiven Master-Einheit 38 durch eine hybride Slave-Einheit 36 besteht darin, dass die Master-Einheit 38 zwar noch regelmäßig Telegramme 18 aussendet, dass die Telegramme 18 aber zum Beispiel in einem hohen Maße Fehler aufweisen. Indem die hybride Slave-Einheit 36 eine Übertragung der Datentelegramme 18 über den Bus überwacht, kann diese eine solche Situation erkennen und die hybride Master-Einheit 38 passivieren. Das automatische Passivieren erfolgt mittels der Master-Steuereinheit 48 und eines davon generierten Umschaltsignals 50. Indem aufgrund eines resultierenden Schaltzustands des Funktionswechslers 40 zumindest die Durchschaltung der Schnittstelle 34 auf die Master-Einheit 38 beendet wird, können von der Master-Einheit 38 anschließend keine Telegramme 18 mehr auf den Bus 12 gelangen. Das Ausbleiben der Telegramme 18 wird - wie oben beschrieben - von einer Slave-Einheit 36 eines weiteren an den Bus 12 angeschlossenen Hybriden 30 erkannt. Diese aktiviert daraufhin ihre hybride Master-Einheit 38, so dass diese im Weiteren die Funktion als Busmaster 14 übernimmt.

Bei der automatischen Passivierung einer Master-Einheit 38 kann mittels der Steuereinheit 48 auch das Master-Kontrollregister 60 entsprechend gesetzt werden. Sofern die Master-Einheit 38 noch zumindest soweit betriebsbereit ist, dass eine Auswertung des Master-Kontrollregisters 60 möglich ist, kann auf diese Weise ein geordneter Zustandswechsel der Master-Einheit 38 im Rahmen einer Funktionalität einer dem Steuerprogramm 56 übergeordneten Systemsoftware der Master-Einheit 38 erfolgen.

Eine weitere Möglichkeit zur Überwachung der Übertragung von Datentelegrammen 18 durch eine Slave-Einheit 36, auf deren Basis eine automatische Passivierung der hybriden Master-Einheit 38 erfolgen kann, ergibt sich in Form einer Überwachung eines sogenannten Working Counters, also desjenigen Zählers, mit dem überwacht wird, ob ein von einem Busmaster 14 ausgesandtes Telegramm 18 alle an den Bus 12 angeschlossenen Gruppe von Slaves 16 erreicht hat. Insbesondere wird ein Working-Counter im Summenrahmenverfahren eingesetzt, um die Bearbeitung eines Datentelegramms beim Durchlauf durch einen Busteilnehmer zu registrieren. Dazu wird der Wert des Working Counters verändert. Im Falle eines oder mehrerer durch den Stand des Working Counters zum Ausdruck kommenden Fehler kann die Slave-Einheit 36 ihre aktive hybride Master-Einheit 38 automatisch passivieren, wobei vorgesehen sein kann, dass zur Auslösung der Passivierung die Anzahl der Fehler einen Schwellenwert überschreitet. Der Übergang der Busmaster-Eigenschaft an eine andere Master-Einheit 38 erfolgt anschließend wie oben beschrieben. Eine Überwachung des Working Counters kann in der Art eines aus der Überwachung von Programmabläufen bekannten Watchdogs erfolgen, insbesondere in der Slave-Einheit oder der Master-Einheit der Busteilnehmer-Einrichtung.

Zusätzlich oder alternativ besteht auch die Möglichkeit, die von einer passiven Master-Einheit 38 aufgrund des kontinuierlichen Mithörens des Datenverkehrs über den Bus 12 generierten Daten auszuwerten. Üblicherweise ist zu erwarten, dass eine aktive Master-Einheit 38 und eine passive Master-Einheit 38 aufgrund gleicher von den Slaves 16 empfangener Daten sowie aufgrund eines identischen Steuer- oder Prüfprogramms 56 gleiche Daten generieren. Die von der aktiven Master-Einheit 38 generierten Daten finden sich zumindest teilweise in den Telegrammen 18, die von dieser auf den Bus 12 gegebenen werden. Die hybride Slave-Einheit 36 einer passiven Master-Einheit 38 kann die mit einem Telegramm 18 empfangenen Daten automatisch mit den von ihrer hybriden Master-Einheit 38 generierten Daten vergleichen. Im Falle von Fehlern, speziell im Falle einer Überschreitung einer als Maß für eine Fehlerhäufigkeit und/oder Fehlermenge definierten Schwelle, kann die jeweilige Slave-Einheit 36 ihre hybride Master-Einheit 38 automatisch passivieren. Auch hier erfolgt der Übergang der Busmaster-Eigenschaft an eine andere Master-Einheit 38 wie weiter oben beschrieben.

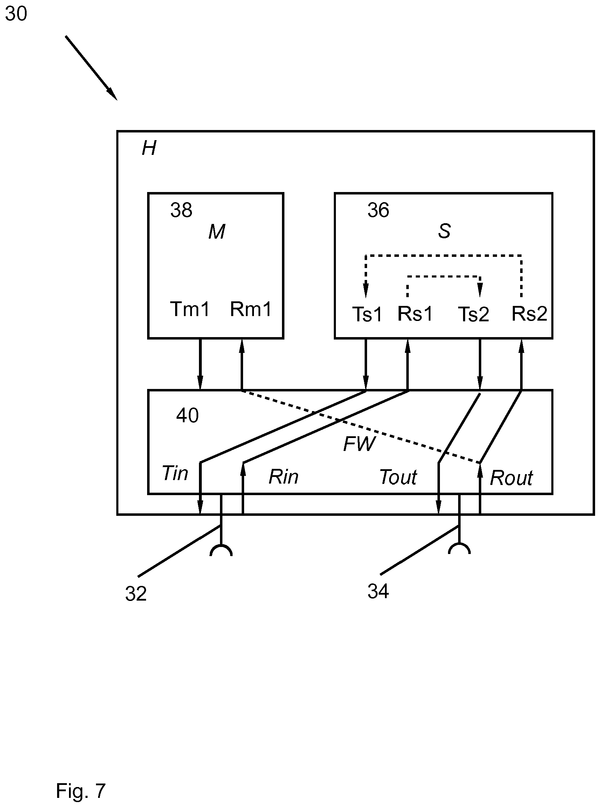

Fig. 7 zeigt zwei getrennte Slave-Schnittstellen an einer Slave-Einheit 36 eines Hybriden H, die unabhängig voneinander geschaltet werden können. Dies erlaubt eine Ringverdrahtung des Datenbusses. Insbesondere, aber nicht ausschließlich, kann bei geringeren Verfügbarkeitsanforderungen auch eine Linienverdrahtung realisiert werden, die gegebenenfalls Verzweigungen aufweisen kann.

Zur synchronen Bearbeitung der Applikationen im Master 14,38 und im Slave 16,36 müssen deren lokale Uhren aufeinander abgeglichen werden. Die lokalen Uhren sind üblicherweise in jedem der Slaves im Netz angeordnet. Zum Synchronisieren wird die Zeit einer ausgewählten Uhr (Referenzuhr) durch den Master 14, 38 an zumindest einen, bevorzugt jedoch alle Slaves 16, 36 übertragen. Diese Uhr ist im lokalen Slave 36 der aktiven Master-Einheit 38 realisiert. Die Abweichungen der anderen Uhren können durch den jeweiligen Slave 16, 36 in Hardware gemessen sowie durch den aktiven Master gelesen und kompensiert werden, wobei die durch die Übertragung entstehenden zeitlichen Verzögerungen erfasst und ausgeglichen werden. Diese Verzögerungen sind abhängig von der Position der Teilnehmer am Datenbus 12 und können bei Veränderungen angepasst werden.

Durch das Aktivieren eines Ersatz-Masters ändert sich die Reihenfolge der Slaves, die von ihm verwaltet werden. Daher wird vorgeschlagen, die positionsabhängigen Verzögerungen bei oder nach einem Masterwechsel neu zu berechnen. Dadurch kann die bestehende Synchronisation fortgeführt werden und eine zeitaufwendige NeuSynchronisation wird vermieden.

In einem Datenbus mit Ringstruktur, der in Figur 4 gezeigt ist, betragen die Verzögerungszeiten in beiden Richtungen jeweils
zwischen H(M) und S1: 700ns,
zwischen S1 und S2: 500ns,
zwischen S2 und S3: 300ns,
zwischen S3 und H (S4): 600ns und
zwischen H(S4) und H(M): 200ns.

In dem Beispiel beträgt die Verzögerungszeit zwischen dem Hybriden H(M) und dem Slave S2 700+500ns. Die empfangene Zeit im Slave 2 wird gegenüber der Zeit, die vom Slave 36 des Hybriden 30 von H(M) gesendet wird, um 1200ns korrigiert. Wenn nun beispielsweise der Master H(M) komplett ausfällt und der Ring dadurch unterbrochen wird, so erreicht der neue Master H (S4) den Slave 2 über den Pfad H(S4), S3, S2. Damit beträgt die Verzögerung jetzt 600+300. Daher wird die empfangene Zeit im Slave 2 um 900ns korrigiert. Die die neue Verzögerungszeit kann durch Addition von schon bekannten Verzögerungen ermittelt werden. Der passive Master kann diese im Umschaltfall nötige Berechnung schon während der Passivphase berechnen. Vorzugsweise werden nach einem Masterwechsel erst die Korrekturen vorgenommen und anschließend wieder synchronisiert.

Das vorstehend zuletzt beschriebene Verfahren zur Neusynchronisation setzt voraus, dass die Verzögerungszeiten bekannt sind. Die Neufestlegung der Synchronisation kann durch eine Parametrierung oder durch eine dynamische Kalkulation erfolgen. Bei der dynamischen Kalkulation wird die Differenz der Empfangszeiten der zu synchronisierenden Einheit von der Differenz der Empfangszeiten des Nachfolgers in der seriellen Reihe der Busteilnehmer abgezogen und das Resultat dann halbiert. Diese Methode ist bekannt und wird hier nicht weiter diskutiert. Die Methode der Empfangszeitstempelung ist meist schon in den Slave integriert. An einer Schnittstelle des Hybriden H(M), die als Empfangsschnittstelle wirkt, ist dies im Falle eines offenen Rings jedoch üblicherweise nicht von Standardkomponenten unterstützt. Daher kann diese Funktion durch eine Zusatzeinrichtung (z.B. einen Timer) realisiert werden. Viele Slaves umfassen bereits unterstützende Hardware für diesen Vorgang.

Figur 7 zeigt eine Busteilnehmer-Einrichtung 30, welche eine Master-Einheit 38, eine Slave-Einheit 36 und einen Funktionswechsler 40 umfasst. Der Funktionswechsler bewirkt eine Verschaltung zwischen den internen Ports Ts1, Rs1, Ts2, Rs2, Tm1, Rm1 der Slave-Einheit 36 und der Master-Einheit 38 sowie zu den Schnittstellen 32 und 34 der Busteilnehmer-Einrichtung 30, die dem ersten und zweiten Schaltmodus der Busteilnehmer-Einrichtung 30 entspricht.
Die vom aktivem Master gesendeten Daten erreichen den Hybriden an der Schnittstelle 32, die als Empfangsschnittstelle arbeitet, Sie werden über den Funktionswechsler 40 an die Slave-Einheit 36 weitergeleitet. Dort erreichen sie Ts2 und verlassen über die Schnittstelle 34, die als Sendeschnittstelle arbeitet, den Hybriden 30, um danach weitere, bevorzugt alle anderen Slaves zu durchlaufen, und zwar zunächst die Slaves bis zu einem physischen Ende des Busses. Entsprechend werden beim ersten offenen Port eines nachfolgenden Slaves die Daten zurückgeschickt und erreichen an der Schnittstelle 34 wieder die Busteilnehmer-Einrichtung 30. Dort werden die Daten über Rs2, Ts1 von Slave-Einheit 36 und Tin vom Funktionswechsler 40 zum nächsten Slave in Richtung Master weitergeleitet.
Die Master-Einheit 38 empfängt ebenfalls die von der Slave-Einheit 36 empfangenen Daten. In Figur 7 ist der Empfangsport Rm1 der Master-Einheit 38 beispielhaft mit der Schnittstelle 34 der Bus Teilnehmer-Einrichtung 30 verbunden, welche zugleich mit dem Empfangsport Rs2 der Slave-Einheit 36 verbunden ist. In diesem Beispiel arbeitet die Schnittstelle 34 als Empfangsschnittstelle der Busteilnehmer-Einrichtung 30, so dass die Master-Einheit 38 die empfangenen Daten ebenfalls empfängt. Die empfangenen Daten überträgt die Slave-Einheit 36 intern zu über ihre Sendeport Ts1 und versendet die Daten über die Schnittstelle 32. Mittels ihrem doppelten Satz von Sende- und Empfangsports Ts1, Rs1, Ts2, Rs2 kann die Slave-Einheit 36 in der gezeigten Verschaltung Datentelegramm in beide mögliche Richtungen zwischen den Schnittstellen 32 und 34 der Busteilnehmer-Einrichtung 30 weiterleiten. Dazu sind die Ports Ts1 und Rs1 mit der Schnittstelle 32 verbunden, so dass die Slave-Einheit 36 auf dieser Schnittstelle 32 sowohl senden als auch empfangen kann. Analoges gilt für die Ports Ts2 und Rs2 in Bezug auf die Schnittstelle 34. Die Busteilnehmer-Einrichtung 30 kann somit in einer Slave-Betriebsart gemäß einem Hop-to-Hop-Verfahren in beide möglichen Betriebsrichtungen des Datenbusses 12 verwendet werden. Die Slave-Einheit 36 kann die Daten nur durchleiten oder zusätzlich auch verarbeiten. Der Vorgang ist durch die gestrichelten Pfeile zwischen den Ports Ts1, Rs1, Ts2, Rs2 dargestellt. Bei einer Verwendung, in der an der Schnittstelle 32 Datentelegramme 18 empfangen werden, kann der Eingangsport Rm1 der Master-Einheit 38 anders als in der Figur 7 dargestellt mit der Schnittstelle 32 und dem Empfangsport Rs1 der Slave-Einheit 36 verbunden sein. Denkbar ist jedoch auch, dass die Master-Einheit 38 Daten nach einer eventuellen Bearbeitung durch die Slave-Einheit 36 empfängt.

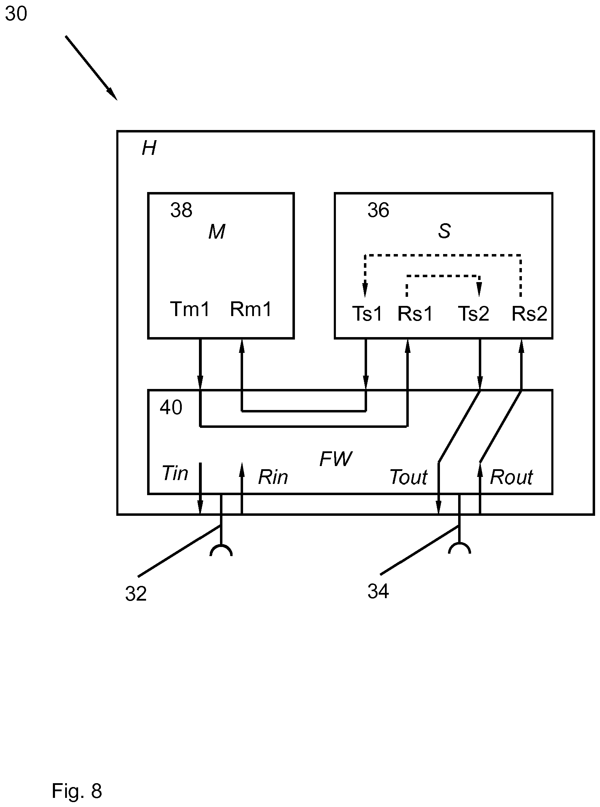

Figur 8 zeigt die Busteilnehmer-Einrichtung 30, die auch in Figur 7 gezeigt ist, wobei jedoch der Funktionswechsler 40 eine andere Verschaltung zwischen den internen Ports der Slave-Einheit 36, der Master-Einheit 38 sowie der Schnittstellen 32 und 34 der Busteilnehmer-Einrichtung 30 bewirkt. Die Verschaltung entspricht dem dritten Schaltmodus der Busteilnehmer-Einrichtung 30, insbesondere für einen Betrieb an einem geschlossenen Ring, bevorzugt, wenn das System fehlerfrei arbeitet. Die Master-Einheit 38 arbeitet als Busmaster und sendet die Daten von Tm1 an die Slave-Einheit 36. Von dort werden sie zu den anderen Slaves und wieder vom letzten offenen Port zurück durch alle vorgelagerten Slaves und über Ts1 der Slave-Einheit 36 zurück zum Rm1 der Master-Einheit 38 gesendet. Da sich der Master an einem Anfang und einem Ende der Kette von Busteilnehmern befindet, welche von Master-Einheit 38 gesendete Nachrichten empfangen, kann die zweite Schnittstelle 32 der Busteilnehmer-Einrichtung 30 intern unbelegt bleiben.

Die Schnittstelle 34 ist mit dem Sendeport Ts2 und dem Empfangsport Rs2 der Slave-Einheit 36 verbunden. Die Schnittstelle 34 ist somit zum Senden wie auch zum Empfangen eingerichtet. Intern sind die Slave-Einheit 36 und die Master-Einheit 38 durch Verbindung der Ports Tm1 und Rs1 sowie Ts2 und Rm2 zur bidirektionalen Kommunikation gekoppelt. Die Slave-Einheit 36 kann somit empfangene und/oder von ihr weiterverarbeitete Daten an die Master-Einheit 38 weiterleiten bzw. von dieser Daten empfangen und sie auf die Schnittstelle 34 weiterleiten. Die Slave-Einheit 36 kann die Daten nur durchleiten oder zusätzlich auch verarbeiten. Der Vorgang ist durch die gestrichelten Pfeile zwischen den Ports Ts1, Rs1, Ts2, Rs2 dargestellt.

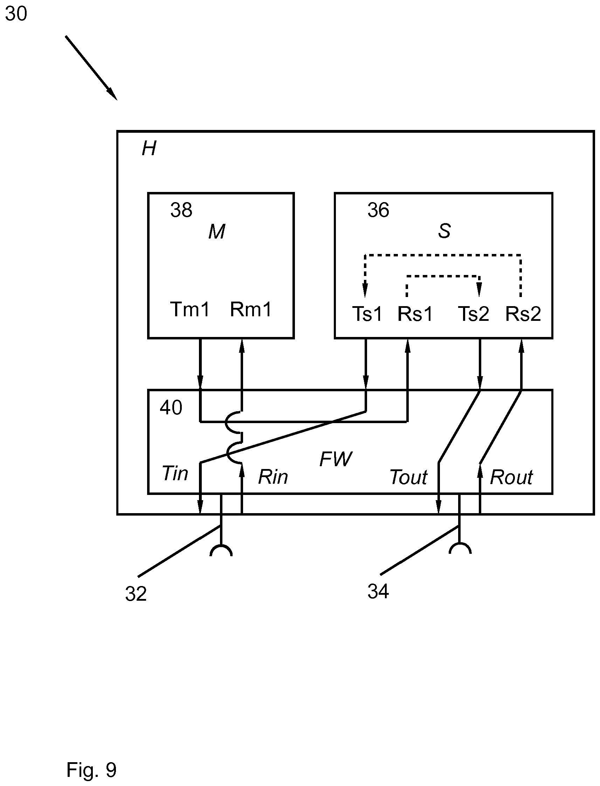

Figur 9 zeigt die Busteilnehmer-Einrichtung 30, die auch in Figur 8 gezeigt ist, wobei jedoch der Funktionswechsler 40 eine andere Verschaltung zwischen den internen Ports Ts1, Rs1, Ts2, Rs2, Tm1, Rm1 der Slave-Einheit 36 und der Master-Einheit 38 zu der Schnittstelle 32 und der Schnittstelle 34 der Busteilnehmer-Einrichtung 30 bewirkt. Die gezeigte Verschaltung ist insbesondere für einen Betrieb der Busteilnehmer-Einrichtung an einem als Strang oder offener Ring ausgebildeten Datenbus 12 geeignet. Die Master-Einheit 38 und die Slave-Einheit 36 sind mit den Schnittstellen 32 und 34 wie in der Figur 8 verschaltet, jedoch mit den Unterschieden, dass nicht alle zurücklaufenden Datentelegramme 18 beim Port Rm1 der Master-Einheit 38 ihr Ende finden. Dadurch, dass der Sendeport Ts1 der Slave-Einheit 36 mit der Schnittstelle 32 in Ihrer Funktion als Sendeschnittstelle verbunden ist, werden die Datentelegramme 18 zu den Slaves in dem daran angeschlossenen Strangabschnitt des Datenbusses weitergeleitet. Erst die zurücklaufenden Datentelegramme 18 erreichen über die dann als Empfangsschnittstelle arbeitende Schnittstelle 32 das Empfangsport Rm1 der Master-Einheit 38. Die Verschaltung ist für den dritten Schaltmodus der Busteilnehmer-Einrichtung 30 zum Betrieb an eine offenen Ring bzw. Strang geeignet. Eine solche Architektur kann gewollt sein, sie kann aber insbesondere durch den Aufbruch einer Ringarchitektur eines Datenbusses 12 entstehen, beispielsweise durch den Ausfall eines Slaves 14 oder einer Busteilnehmer-Einrichtung 30, die im Normalbetrieb im Hop-to-Hop-Verfahren Datentelegramme 18 weiterleiten. Ein Kabelbruch kann zu denselben Konsequenzen führen. Aus der Master-Einheit 38 können über die Slave-Einheit 36 Datentelegramme 18 gesendet werden, wobei die Daten von dem Port Tm1 der Master-Einheit 38 zum Port Rs1 der Slave-Einheit 36, über die gestrichelt dargestellte Verbindung durch die Slave-Einheit 36 zu dessen Sendeport Ts2 und von dort über die Schnittstelle 34 und über nicht dargestellte Busteilteilnehmer bis zu einem Ende des Strangs laufen. Von dem letzten Busteilnehmer werden sie in Gegenrichtung weitergesendet und treffen wieder bei der Busteilnehmer-Einrichtung 30 ein. Wenn sich die Busteilnehmer-Einrichtung 30 an dem anderen Ende des Strangs befindet, endet das Datentelegramm hier, anderenfalls wird es auf einen zweiten Strangabschnitt weitergeleitet, der in Bezug auf den ersten Strangabschnitt, der schon durchlaufen wurde, in entgegengesetzter Richtung liegt. Dabei läuft das Datentelegramm 18 über die Schnittstelle 34 und den Empfangsport Rs2 in die Slave-Einheit 36, welche es über die gestrichelt dargestellt interne Verbindung zu dem Sendeport Ts1 überträgt, welcher mit der Schnittstelle 32 verbunden ist. Von dort läuft das Datentelegramm bis zum Ende des zweiten Strangabschnitts, wo es vom letzten Busteilnehmer zurückgeschickt wird und schließlich wieder an der Busteilnehmer-Einrichtung 30 ankommt. Von hier wird es über den Empfangsport Rm1 der Master-Einheit 38 eingelesen. Auf diese Weise kann die Busteilnehmer-Einrichtung eine Rückmeldung von allen Busteilnehmern einer strangförmigen Busarchitektur erhalten, insbesondere zur Erkennung von Fehlern an angeschlossenen Busteilnehmern und/oder Messung von Laufzeiten zwischen Busteilnehmern. Die letztgenannten Informationen kann die Master-Einheit 38 zur Synchronisation der anderen Busteilnehmer nutzen. Beispielsweise kann sie ein Auffrischungstelegramm mit neuen Synchronisationsdaten an die Busteilnehmer senden. Die Synchronisationsdaten können beispielsweise aus Laufzeiten berechnet werden, die gespeichert sind und/oder die die Master-Einheit 38 aus den Rückmeldungen der Busteilnehmer errechnet hat.

## Patentansprüche

1. Busteilnehmer-Einrichtung (30) zum Empfangen und Senden von Datentelegrammen (18) über einen seriellen Datenbus (12) gemäß einem Master/Slave-Verfahren,
**dadurch gekennzeichnet, dass** die Busteilnehmer-Einrichtung (30)
- eine Master-Einheit (38),
- eine Slave-Einheit (36) mit
-- einem Slave-Stack (SSS),
-- einem Slave-Controller (SSC) und
-- einer Master-Steuereinheit (48),
- einen Funktionswechsler (40), der mit der Slave-Einheit (36) ansteuerbar ist, und
- ein internes Kommunikationsmittel (58) zur direkten Kommunikation zwischen der Master-Einheit (38) und der Slave-Einheit (36)
umfasst,
wobei die Master-Einheit (38) der Busteilnehmer-Einrichtung (30) dazu eingerichtet ist, die zur Übernahme der Funktion eines bisherigen Masters durch die Master-Einheit (38) der Busteilnehmer-Einrichtung (30) notwendige Überwachung des Datenverkehrs am Datenbus (12) auszuführen,
wobei die Slave-Einheit (36) und die nur zum Lesen angeschaltete Master-Einheit (38) in einem zweiten Schaltmodus an den Datenbus (12) anschaltbar sind,
wobei Überwachungsergebnisse von der Master-Einheit (38) zu der Slave-Einheit (36) kommunizierbar sind,
wobei durch den Funktionswechsler (40) als Reaktion auf ein Umschaltsignal (50) von der Slave-Einheit (36) eine An- oder Abschaltung an den Datenbus (12) bewirkbar ist,
wobei die Master-Einheit (38) der Busteilnehmer-Einrichtung (30) durch die Slave-Einheit (36) der Busteilnehmer-Einrichtung (30) anhand von Datentelegrammen auf dem Datenbus (12) überwachbar und aktivierbar und deaktivierbar ist.

2. Busteilnehmer-Einrichtung (30) nach Anspruch 1, **dadurch gekennzeichnet, dass** die Busteilnehmer-Einrichtung (30) für eine direkte Kommunikation zwischen der Master-Einheit (38) und der Slave-Einheit (36) über das interne Kommunikationsmittel (58) eingerichtet ist, wobei die Busteilnehmer-Einrichtung (30) dazu eingerichtet ist, dass die Kommunikation durch
- einen Speicherbereich, der für die Slave-Einheit (36) und für die Master-Einheit (38) zugänglich ist oder
- herkömmliche interne Bussysteme oder
- direkte parallele Datenportverbindungen
erfolgt.

3. Busteilenhmer-Einrichtung (30) nach Anspruch 1 oder 2, **dadurch gekennzeichnet, dass** die Busteilnehmer-Einrichtung (30) durch den Funktionswechsler (40) zwischen folgenden Schaltmodi umschaltbar ist:
- die Slave-Einheit (36) ist in einem ersten Schaltmodus ohne Master-Einheit (38) an den Datenbus (12) angeschaltet,
- die Slave-Einheit (36) ist in einem zweiten Schaltmodus mit einer nur zum Lesen angeschalteten Master-Einheit (38) an den Datenbus (12) angeschaltet und
- die Slave-Einheit (36) und die aktive Master-Einheit (38) sind in einem dritten Schaltmodus zum Lesen und Schreiben in Reihe an den Datenbus (12) angeschaltet.

4. Busteilnehmer-Einrichtung (30) nach einem der vorangehenden Ansprüche,
**dadurch gekennzeichnet, dass** die Master-Steuereinheit (48) mit dem Funktionswechsler (40) und dem internen Kommunikationsmittel (58) verbunden ist.

5. Busteilnehmer-Einrichtung (30) nach einem der vorangehenden Ansprüche ,
**dadurch kennzeichnet, dass** durch den Funktionswechsler (40) eine Verschaltung zwischen den folgenden internen Ports der Slave-Einheit (36)
- erstes Sendeport des Slaves (Ts1),
- erstes Empfangsport des Slaves (Rs1),
- zweites Sendeport des Slaves (Ts2),
- zweites Empfangsport des Slaves (Rs2),
den folgenden internen Ports der Master-Einheit (38)
- Sendeport des Masters (Tm1),
- Empfangsport des Masters (Rm1) und
den Schnittstellen (32) und (34) der Busteilnehmer-Einrichtung (30) bewirkbar ist.

6. Busteilnehmer-Einrichtung (30) nach einem der vorangehenden Ansprüche, **dadurch gekennzeichnet, dass** in einem ersten Schaltmodus die Master-Einheit (38) von dem Datenbus (12) getrennt ist, wobei die Busteilnehmer-Einrichtung (30) dazu eingerichtet ist, als Slave zu fungieren,
wobei die Slave-Einheit (36) mit einem doppelten Satz von Empfangs- und Sendeports ausgestattet ist, und
wobei der Funktionswechsler (40) so geschaltet ist, dass
das erste Sendeport (Ts1) der Slave-Einheit (36)
mit der Schnittstelle (32) der Busteilnehmer-Einrichtung (30) verbunden ist und
das erste Empfangsport des Slaves (Rs1) der Slave-Einheit (36) mit der Schnittstelle (32) der Busteilnehmer-Einrichtung (30) und
das zweite Sendeport (Ts2) der Slave-Einheit (36)
mit der Schnittstelle (34) der Busteilnehmer-Einrichtung (30) und
das zweite Empfangsport des Slaves (Rs2) der Slave-Einheit (36) mit der Schnittstelle (34) der Busteilnehmer-Einrichtung (30) verbunden ist.

7. Busteilnehmer-Einrichtung (30) nach einem der vorangehenden Ansprüche, **dadurch gekennzeichnet, dass** die Slave-Einheit (36) mit einem doppelten Satz von Sende- und Empfangsports ausgestattet ist,
in einem zweiten Schaltmodus die passive Master-Einheit (38) nur zum Lesen an den Datenbus (12) und die Slave-Einheit (36) an den Datenbus (12) anschaltbar ist, wobei der Funktionswechsler (40) so geschaltet ist, dass
- ein Empfangsport (Rm1) der Master-Einheit (38)
mit der Schnittstelle (34) der Busteilnehmer-Einrichtung (30) verbunden ist und
- ein erstes Sendeport (Ts1) der Slave-Einheit (36)
mit der Schnittstelle (32) der Busteilnehmer-Einrichtung (30) verbunden ist und
- ein erstes Empfangsport (Rs1) der Slave-Einheit (36)
mit der Schnittstelle (32) der Busteilnehmer-Einrichtung (30) verbunden ist und
- ein zweites Sendeport (Ts2) der Slave-Einheit (36)
mit der Schnittstelle (34) der Busteilnehmer-Einrichtung (30) verbunden ist und
- ein zweites Empfangsport (Rs2) der Slave-Einheit (36)
mit der Schnittstelle (34) der Busteilnehmer-Einrichtung (30) verbunden ist.

8. Busteilnehmer-Einrichtung (30) nach einem der vorangehenden Ansprüche, **dadurch gekennzeichnet, dass** die Slave-Einheit (36) mit einem doppelten Satz von Sende- und Empfangsports ausgestattet ist, wobei der Funktionswechsler (40) in einem dritten Schaltmodus für den Fall, dass das System fehlerfrei arbeitet, so geschaltet ist, dass
- das Sendeport (Tm1) der aktiven Master Einheit (38) mit dem
ersten Empfangsport (Rs1) der Slave-Einheit (36) verbunden ist und
- das Empfangsport (Rm1) der aktiven Master-Einheit (38)
mit dem ersten Sendeport (Ts1) der Slave-Einheit (36) verbunden ist und
- das zweite Sendeport (Ts2) der Slave-Einheit (36)
mit der Schnittstelle (34) der Busteilnehmer-Einrichtung (30) verbunden ist und
- das zweite Empfangsport (Rs2) der Slave Einheit (36)
mit der Schnittstelle (34) der Busteilnehmer-Einrichtung (30) verbunden ist.

9. Busteilnehmer-Einrichtung (30), nach einem der vorangehenden Ansprüche ,
**dadurch gekennzeichnet, dass** die Slave-Einheit (36) mit einem doppelten Satz von Sende- und Empfangsports ausgestattet ist, wobei in einem dritten Schaltmodus gleichzeitig die Slave-Einheit (36) und die aktive Master-Einheit (38) zum Lesen und zum Schreiben und in Reihe an den Datenbus (12) anschaltbar sind,
wobei der Funktionswechsler (40) für einen Betrieb der Busteilnehmer-Einrichtung (30) an einem als offener Ring ausgebildeten Datenbus (12) so geschaltet ist,
dass,
- das Sendeport (Tm1) der lokalen aktiven Master Einheit (38)
mit dem ersten Empfangsport (Rs1) der Slave Einheit (36) verbunden ist und
- das Empfangsport (Rm1) der aktiven Master Einheit (38)
mit der Schnittstelle (32) der Busteilnehmer-Einrichtung (30) verbunden ist und
- das erste Sendeport (Ts1) der Slave-Einheit (36)
mit der Schnittstelle (32) der Busteilnehmer-Einrichtung (30) verbunden ist und
- das zweite Sendeport (Ts2) der Slave Einheit (36)
mit der Schnittstelle (34) der Busteilnehmer-Einrichtung (30) verbunden ist und
- das Empfangsport des Slaves (Rs2) der Slave Einheit (36)
mit der Schnittstelle (34) der Busteilnehmer-Einrichtung (30) verbunden ist.

10. Verfahren zum Betrieb eines seriellen Datenbusses (12), der nach einem Master-Slave-Verfahren betrieben wird, **dadurch gekennzeichnet, dass** eine erste Busteilnehmer-Einrichtung (30) und eine zweite Busteilnehmer-Einrichtung (30) an den Datenbus (12) angeschlossen und jeweils Busteilnehmer-Einrichtungen (30) gemäß Anspruch 1 sind,
wobei die erste Busteilnehmer-Einrichtung (30) eine aktive Master-Einheit (38) und
die zweite Busteilnehmer-Einrichtung (30) eine passive Master-Einheit (38) beinhaltet, und wobei das Verfahren die folgenden Verfahrensschritte umfasst:
a1. die Slave-Einheit (36) in der ersten Busteilnehmer-Einrichtung (30) deaktiviert als Ergebnis einer Überwachung der Übertragung von Datentelegrammen (18) auf dem Datenbus (12) den aktiven Master (38) in der ersten Busteilnehmer-Einrichtung (30),
a2. die Slave-Einheit (36) in der zweiten Busteilnehmer-Einrichtung (30) überwacht den aktiven Master (38) in der ersten Busteilnehmer-Einrichtung (30) anhand von Daten auf dem Datenbus (12),
b1. die Slave-Einheit (36) in der ersten Busteilnehmer-Einrichtung (30) schaltet im Fehlerfall die aktive Master-Einheit (38) in der ersten Busteilnehmer-Einrichtung (30) durch ihren Funktionswechsler (40) in den ersten Schaltmodus, wodurch von der Master-Einheit (38) anschließend keine Telegramme (18) mehr auf den Bus (12) gelangen, und
b2. die Slave-Einheit (36) in der zweiten Busteilnehmer-Einrichtung (30) bewirkt in Abhängigkeit von einem Ergebnis der Überwachung eine Aktivierung der von der zweiten Busteilnehmer-Einrichtung (30) umfassten Master-Einheit (38).

11. Verfahren nach dem Anspruch10, **dadurch gekennzeichnet, dass** die Slave-Einheit (36) dazu eingerichtet ist, den Aktivierungsfall an Hand ausbleibender Datentelegramme (18) oder nicht erwarteter Empfangszeitpunkte selbst zu erkennen.

12. Verfahren nach einem der Ansprüche 10 oder 11, **dadurch gekennzeichnet, dass** eine Slave-Einheit (36) in einer Busteilnehmer-Einrichtung (30), indem sie die Übertragung der Datentelegramme (18) über den Datenbus (12) überwacht, erkennt, dass die Master-Einheit (38) regelmäßig Telegramme (18) aussendet und dass die Telegramme (18) in einem hohen Maße Fehler aufweisen, und die Slave-Einheit (36) in einer solchen Situation, nämlich im Falle einer Überschreitung einer als Maß für eine Fehlerhäufigkeit und/oder Fehlermenge definierten Schwelle, die Master-Einheit (38) der ersten Busteilnehmer-Einrichtung (30) passiviert.

13. Verfahren nach einem der Ansprüche 10 bis 12, **dadurch gekennzeichnet, dass** die Busteilnehmer-Einrichtung (30) durch den Funktionswechsler (40) zwischen folgenden drei Schaltmodi umgeschaltet wird:
- die Slave-Einheit (36) wird in einem ersten Schaltmodus ohne Master-Einheit (38) an den Datenbus (12) angeschaltet,
- die Slave-Einheit (36) wird in einem zweiten Schaltmodus mit einer nur zum Lesen angeschalteten Master-Einheit (38) an den Datenbus (12) angeschaltet und
- die Slave-Einheit (36) und die aktive Master-Einheit (38) werden in einem dritten Schaltmodus zum Lesen und Schreiben in Reihe an den Datenbus (12) angeschaltet .

14. Verfahren nach einem der Ansprüche 10 bis 13, **dadurch gekennzeichnet, dass**, wenn ein Ergebnis der Überwachung, das durch die Master-Steuereinheit (48) ermittelt wird, einen Statuswechsel des Masters (38) bedeutet, die von der Slave-Einheit (36) umfasste Master-Steuereinheit (48) die Master-Einheit (38) direkt über den dort notwendigen Statuswechsel informiert, nämlich über einen Statuswechsel von einem bisherigen passiven Status und dem bloßen Mithören von über den Datenbus (12) übermittelten Telegrammen (18) zu einem aktiven Status mit einer Übernahme der Funktion als Busmaster (14), wobei die Steuereinheit (48) ein Umschaltsignal (50) zur Umschaltung des Funktionswechsels (40)

15. Verfahren nach einem der Ansprüche 10 bis 14, **dadurch gekennzeichnet, dass** die Mastersteuereinheit (48) zur Aktivierung der Master-Einheit (38) einen vorgegebenen Wert in ein Master-Kontrollregister für ihre Aktivierung schreibt, wobei das Master-Kontrollregister (60) von der Master-Einheit (38) regelmäßig überwacht wird.

16. Verfahren nach einem der Ansprüche 10 bis 15, **dadurch gekennzeichnet, dass** die an die passive und aktive Master-Einheit (38) zu übertragenden Daten durch eines oder mehrere Prozessdatenobjekte (PDO) oder Servicedatenobjekte (SDO) an die lokale Slave-Einheit (36) der Busteilnehmer-Einrichtung (30) adressiert werden,
wobei die lokale Slave-Einheit (36) die eingehenden Prozessdatenobjekte (PDO) oder Servicedatenobjekte (SDO) auswertet und darin für die Master-Einheit (38) bestimmte Daten
- direkt in einen Adressbereich eines Speichers der Master-Einheit (38) weiterleitet
- oder von dort liest und die Daten an den Datenbus (12) weiterleitet.

17. Verfahren nach einem der Ansprüche 10 bis 16, **dadurch gekennzeichnet, dass** die Master-Einheit (38) als Untergruppe der Slave-Einheit (36) von externen Busteilnehmern angesprochen wird, wobei die Slave-Einheit (36) als Relais zu der passiven und aktiven Master-Einheit 38 fungiert.

18. Verfahren nach einem der Ansprüche 10 bis 17, **dadurch gekennzeichnet, dass** zur Synchronisierung von Busteilnehmern (18, 16, 30) vor, bei oder nach einem Masterwechsel Verzögerungszeiten zwischen der neuen Master-Einheit (38) und den anderen Teilnehmern berechnet werden und
die neue Master-Einheit (38) die Verzögerungszeiten zur Synchronisation der Busteilnehmer nutzt.

19. Energieautomatisierungseinrichtung, **dadurch gekennzeichnet, dass** sie zumindest eine Busteilnehmer-Einrichtung (30) nach einem der Ansprüche 1 bis 9 umfasst und/oder dazu eingerichtet ist, nach einem Verfahren nach einem der Ansprüche 10 bis 18 betrieben zu werden.

20. Medizintechnisches Gerät, **dadurch gekennzeichnet, dass** es zumindesteine Busteilnehmer-Einrichtung (30) nach einem der Ansprüche 1 bis 9 umfasst und/oder dazu eingerichtet ist, nach einem Verfahren nach einem der Ansprüche 10 bis 18 betrieben zu werden.

21. Verfahrenstechnische Anlage, **dadurch gekennzeichnet, dass** sie zumindest eine Busteilnehmer-Einrichtung (30) nach einem der Ansprüche 1 bis 9 umfasst und/oder dazu eingerichtet ist, nach einem Verfahren nach einem der Ansprüche 10 bis 18 betrieben zu werden.

22. Anlage zur Überwachung und/oder Steuerung von Weichen, **dadurch gekennzeichnet, dass** sie zumindest eine Busteilnehmer-Einrichtung (30) nach einem der Ansprüche 1 bis 9 umfasst und/oder dazu eingerichtet ist, nach einem Verfahren nach einem der Ansprüche 10 bis 18 betrieben zu werden.

23. Pipeline, **dadurch gekennzeichnet, dass** sie zumindest eine Busteilnehmer-Einrichtung (30) nach einem der Ansprüche 1 bis 9 umfasst und/oder dazu eingerichtet ist, nach einem Verfahren nach einem der Ansprüche 10 bis 18 betrieben zu werden.

24. Tunnel, **dadurch gekennzeichnet, dass** er zumindest eine Busteilnehmer-Einrichtung (30) nach einem der Ansprüche 1 bis 9 umfasst und/oder dazu eingerichtet ist, nach einem Verfahren nach einem der Ansprüche 10 bis 18 betrieben zu werden.

25. Windkraftanlage, **dadurch gekennzeichnet, dass** sie zumindest eine Busteilnehmer-Einrichtung (30) nach einem der Ansprüche 1 bis 9 umfasst und/oder dazu eingerichtet ist, nach einem Verfahren nach einem der Ansprüche 10 bis 18 betrieben zu werden.

26. Fortbewegungsmittel mit einem seriellen Datenbus (12) für einen Master-Slave-Betrieb mit mehreren Busteilnehmern, **dadurch gekennzeichnet, dass** es zumindest eine Busteilnehmer-Einrichtung (30) nach einem der Ansprüche 1 bis 9 umfasst und/oder dazu eingerichtet ist, nach einem Verfahren nach einem der Ansprüche 10 bis 18 betrieben zu werden.

27. Kraftfahrzeug nach Anspruch 26.

28. Schienenfahrzeug nach Anspruch 26.

## Claims

1. A bus participant device (30) for receiving and sending data telegrams (18) via a serial data bus (12) according to a master/slave method,
**characterized in that** the bus participant device (30) comprises
- a master unit (38),
- a slave unit (36) with
-- a Slave-Stack (SSS),
-- a Slave-Controller (SSC) and
- a master control unit (48),
- a function changer (40), controllable by the slave unit (36), and
- an internal communication means (58) for direct communication between the master unit (38) and slave unit (36),
wherein the master unit (38) of the bus participant device (30) is configured to perform the monitoring of the data traffic on the data bus (12) needed to assume the function of a previous master unit by the master unit (38) of the bus participant device (30),
wherein the slave unit (36) and the master unit (38), which is only activated for reading, are switchable in a second switching mode to the data bus (12),
wherein monitoring outputs are communicable from the master unit (38) to the slave unit (36),
wherein a switching to or from the data bus (12) is effectable by the function changer (40) as a reaction to a change-over signal (50) from the slave unit (36),
wherein the master unit (38) of the bus participant device (30) is monitorable and activatable and deactivatable by the slave unit (36) of the bus participant device (30) on the basis of data telegrams on the data bus (12).

2. The bus participant device (30) in accordance with Claim 1, **characterized in that** the bus participant device (30) is configured for direct communication between the master unit (38) and the slave unit (36) via the internal communication means (58),
where the bus participant device (30) is configured such that communication occurs via
- a storage area accessible by the slave unit (36) and the master unit (38), or
- traditional internal bus systems, or
- direct parallel data port connections.

3. The bus participant device (30) in accordance with Claim 1 or 2, **characterized in that** the bus participant device (30) is switchable between the following switching modes by the function changer (40):
- the slave unit (36) is switched to the data bus (12) in a first switching mode without a master unit (38),
- the slave unit (36) is switched to the data bus (12) in a second switching mode with a master unit (38) activated only for reading, and
- the slave unit (36) and the active master unit (38) are switched in series to the data bus (12) in a third switching mode for reading and writing.

4. The bus participant device (30) in accordance with any of the preceding claims, **characterized in that** the master control unit (48) is connected to the function changer (40) and the internal communication means (58).

5. The bus participant device (30) in accordance with any of the preceding claims, **characterized in that** switching is effedctable via the function changer (40), between the following internal ports of the slave unit (36)
- first sending port of the slave (Ts1),
- first receiving port of the slave (Rs1),
- second sending port of the slave (Ts2),
- second receiving port of the slave (Rs2),
the following internal ports of the master unit (38)
- sending port of the master (Tm1),
- receiving port of the master (Rm1) and
the interfaces (32) and (34) of the bus participant device (30).

6. The bus participant device (30) in accordance with any of the preceding claims, **characterized in that**, in a first switching mode, the master unit (38) is disconnected from the data bus (12), wherein the bus participant device (30) is configured to function as a slave, wherein the slave unit (36) is equipped with a double set of receiving and sending ports, and wherein the function changer (40) is switched such that the sending port (Ts1) of the slave unit (36) is connected to the interface (32) of the bus participant device (30) and
the first receiving port of the slave Rs1 (Rs1) of the slave unit (36) is connected to the interface (32) of the bus participant device (30) and
the second sending port (Ts2) of the slave unit (36) with the interface (34) of the bus participant device (30)
and the second receiving port of the slave (Rs2) of the slave unit (36) with the interface (34) of the bus participant device (30).

7. The bus participant device (30) in accordance with any of the preceding claims, **characterized in that** the slave unit (36) is equipped with a double set of sending and receiving ports,
in a second switching mode, the passive master unit (38) can be switched to the data bus (12) only for reading and the slave unit (36) to the data bus (12),
where the function changer (40) is switched such that
- a receiving port (Rm1) of the master unit (38) is connected to
the interface (34) of the bus participant device (30), and
- a first sending port (Ts1) of the slave unit (36) is connected to
the interface (32) of the bus participant device (30), and
- a first receiving port (Rs1) of the slave unit (36)
is connected to the interface (32) of the bus participant device (30), and
- a second sending port (Ts2) of the slave unit (36) is connected to
the interface (34) of the bus participant device (30), and
- a second receiving port (Rs2) of the slave unit (36)
is connected to the interface (34) of the bus participant device (30).

8. The bus participant device (30) in accordance with any of the preceding claims, **characterized in that** the slave unit (36) is equipped with a double set of sending and receiving ports, where the function changer (40) is switched in a third switching mode, in the event that the system
is operating without malfunctions, such that
- the sending port (Tm1) of the active master unit (38) is connected to
the first receiving port (Rs1) of the slave unit (36), and
- the receiving port (Rm1) of the active master unit (38) is connected to the first sending port (Ts1) of the slave unit (36), and
- the second sending port (Ts2) of the slave unit (36) is connected to the interface (34) of the bus participant device (30), and
- the second receiving port (Rs2) of the slave unit (36) is connected to the interface (34) of the bus participant device (30).

9. The bus participant device (30) in accordance with any of the preceding claims, **characterized in that** the slave unit (36) is equipped with a double set of sending and receiving ports, where, in a third switching mode, the slave unit (36) and the active master unit (38) is switchable to the data bus (12) simultaneously for reading and writing and in series,
wherein the function changer (40), for the operation of the bus participant device (30), is switched to a data bus (12) formed as an open ring such that
- the sending port (Tm1) of the local active master unit (38) is connected to the first receiving port (Rs1) of the slave unit (36), and
- the receiving port (Rm1) of the active master unit (38) is connected to the interface (32) of the bus participant device (30), and
- the first sending port (Ts1) of the slave unit (36) is connected to the interface (32) of the bus participant device (30), and
- the second sending port (Ts2) of the slave unit (36) is connected to the interface (34) of the bus participant device (30), and
- the receiving port of the slave (Rs2) of the slave unit (36) is connected to the interface (34) of the bus participant device (30).

10. A method for operating a serial data bus (12) operated according to a master-slave method, **characterized in that** a first bus participant device (30) and a second bus participant device (30) are connected to the data bus (12), and are each bus participant devices (30) in accordance with Claim 1,
wherein the first bus participant device (30) contains an active master unit (38), and the second bus participant device (30) comprises a passive master unit (38), and
wherein the method comprises the following method steps:
a1. The slave unit (36) in the first bus participant device (30) deactivates the active master (38) in the first bus participant device (30) as the result of monitoring the transmission of data telegrams (18) on the data bus (12),
a2. The slave unit (36) in the second bus participant device (30) monitors the active master (38) in the first bus participant device (30) on the basis of data on the data bus (12),
b1. In the event of a malfunction, the slave unit (36) in the first bus participant device (30) switches the active master unit (38) in the first bus participant device (30) to the first switching mode by means of its function changer (40), in consequence of which no further telegrams (18) from the master unit (38) reach the bus (12), and
b2. The slave unit (36) in the second bus participant device (30) effects an activation of the master unit (38) comprised by the second bus participant device (30), depending on the results of the monitoring.

11. The method in accordance with Claim 10, **characterized in that** the slave unit (36) is configured to automatically recognize the case of activation in consequence of the non-arrival of data telegrams (18) or of unexpected receiving times.

12. The method in accordance with any of Claims 10 or 11, **characterized in that** a slave unit (36) in a bus participant device (30) recognizes, through monitoring the transmission of the data telegrams (18) via the data bus (12), that the master unit (38) regularly transmits telegrams (18), and that the telegrams (18) contain a high level of errors, and the slave unit (36) passivates the master unit of the first bus participant device (30) in such a situation, namely in the event that a threshold level specified as a measure of malfunction frequency and/or quantity is exceeded.

13. The method in accordance with any of Claims 10 through 12, **characterized in that** the bus participant device (30) is switched between the following three switching modes by the function changer (40):
- in a first switching mode, the slave unit (36) is switched to the data bus (12) without a master unit (38),
- in a second switching mode, the slave unit (36) is switched to the data bus (12) with a master unit (38) switched on only for reading, and
- in a third switching mode, the slave unit (36) and the active master unit (38) are switched in series to the data bus (12) for reading and writing.

14. The method in accordance with any of Claims 10 through 13, **characterized in that**, if an outcome of the monitoring determined by the master unit (48) means a status change of the master (38), the master control unit (48) comprised by the slave unit (36) directly informs the master unit (38) of the status change required there, namely of a change of status from a previously passive status and mere listening to telegrams (18) transmitted via the data bus (12), to an active status, assuming the function of a bus master (14), wherein the control unit (48) generates a switching signal (50) to switch the function changer (40).

15. The method in accordance with any of Claims 10 through 14, **characterized in that** the master control unit (48) writes, for activation of the master unit (38), a predefined value in a master control register (60) its activation, wherein the master control register (60) is regularly monitored by the master unit (38).

16. The method in accordance with any of Claims 10 through 15, **characterized in that** the data to be transmitted to the passive and active master unit (38) is addressed to the local slave unit (36) of the bus participant device (30) by one or more process data objects (PDO) or service data objects (SDO),
wherein the local slave unit (36) evaluates the incoming process data objects (PDO) or service data objects (SDO) and forwards data contained therein, that are intended for the master unit (38),
- directly to an address area of a storage of the master unit (38)
- or reads from there and forwards the data to the data bus (12).

17. The method in accordance with any of Claims 10 through 16, **characterized in that** the master unit (38) is addressed by external bus participants as a subgroup of the slave unit (36), where the slave unit (36) functions as a relay to the passive and active master unit (38).

18. The method in accordance with any of Claims 10 through 17, **characterized in that**, to synchronize bus participants (18, 16, 30) before, during or after a change of masters, time delays between the new master unit (38) and the other participants are calculated and used by the new master unit (38) to synchronize the bus participants.

19. An energy automation device, **characterized in that** it comprises at least one bus participant device (30) in accordance with any of Claims 1 through 9, and/or is configured to be operated in accordance with a method in accordance with any of Claims 10 through 18.

20. A medical device, **characterized in that** it comprises at least one bus participant device (30) in accordance with any of Claims 1 through 9, and/or is configured to be operated in accordance with a method in accordance with any of Claims 10 through 18.

21. Process plant, **characterized in that** it comprises at least one bus participant device (30) in accordance with any of Claims 1 through 9, and/or is configured to be operated in accordance with a method in accordance with any of Claims 10 through 18.

22. A system to monitor and/or control rail switches, **characterized in that** it comprises at least one bus participant device (30) in accordance with any of Claims 1 through 9, and/or is configured to be operated in accordance with a method in accordance with any of Claims 10 through 18.

23. A pipeline, **characterized in that** it comprises at least one bus participant device (30) in accordance with any of Claims 1 through 9, and/or is configured to be operated in accordance with a method in accordance with any of Claims 10 through 18.

24. A tunnel, **characterized in that** it comprises at least one bus participant device (30) in accordance with any of Claims 1 through 9, and/or is configured to be operated in accordance with a method in accordance with any of Claims 10 through 18.

25. A wind power plant, **characterized in that** it comprises at least one bus participant device (30) in accordance with any of Claims 1 through 9, and/or is configured to be operated in accordance with a method in accordance with any of Claims 10 through 18.

26. A transport means having a serial data bus (12) for master-slave operation with multiple bus participants, **characterized in that** it comprises at least one bus participant device (30) in accordance with any of Claims 1 through 9, and/or is configured to be operated in accordance with a method in accordance with any of Claims 10 through 18.

27. A motor vehicle in accordance with Claim 26.

28. A rail vehicle in accordance with Claim 26.

## Revendications

1. Dispositif noeud de bus (30) destiné à recevoir et à émettre des télégrammes de données (18) par le biais d'un bus de données (12) série selon un procédé maître/esclave,
**caractérisé en ce que** le dispositif noeud de bus (30) comprend
- une unité maître (38),
- une unité esclave (36) dotée de
-- une pile d'esclave (SSS),
-- un contrôleur d'esclave (SSC) et
-- une unité de commande maître (48),
- un changeur de fonction (40) qui peut être piloté avec l'unité esclave (36) et
- un moyen de communication interne (58) destiné à la communication directe entre l'unité maître (38) et l'unité esclave (36),
l'unité maître (38) du dispositif noeud de bus (30) étant conçue pour réaliser la surveillance nécessaire du trafic de données sur le bus de données (12) en vue de la prise en charge de la fonction d'un maître actuel par l'unité maître (38) du dispositif noeud de bus (30),
l'unité esclave (36) et l'unité maître (38), connectée uniquement pour la lecture, pouvant être connectées au bus de données (12) dans un deuxième mode de commutation, les résultats de la surveillance pouvant être communiqués de l'unité maître (38) à l'unité esclave (36),
une connexion au bus de données (12) ou une déconnexion de celui-ci pouvant être provoquée par le changeur de fonction (40) en réaction à un signal de permutation (50) de l'unité esclave (36),
l'unité maître (38) du dispositif noeud de bus (30) pouvant être surveillée et activée et désactivée par l'unité esclave (36) du dispositif noeud de bus (30) à l'aide de télégrammes de données sur le bus de données (12) .

2. Dispositif noeud de bus (30) selon la revendication 1, **caractérisé en ce que** le dispositif noeud de bus (30) est conçu pour une communication directe entre l'unité maître (38) et l'unité esclave (36) par le biais du moyen de communication interne (58), le dispositif noeud de bus (30) étant conçu de telle sorte que la communication s'effectue au travers
- d'une zone de mémoire qui est accessible à l'unité maître (38) et à l'unité esclave (36) ou
- de systèmes de bus internes conventionnels ou
- de liaisons de port de données parallèles directes.

3. Dispositif noeud de bus (30) selon la revendication 1 ou 2, **caractérisé en ce que** le dispositif noeud de bus (30) peut être permuté entre les modes de commutation suivants par le changeur de fonction (40) :
- l'unité esclave (36) est connectée au bus de données (12) dans un premier mode de commutation sans unité maître (38),
- l'unité esclave (36) est connectée au bus de données (12) dans un deuxième mode de commutation avec une unité maître (38) connectée uniquement pour la lecture et
- l'unité esclave (36) et l'unité maître (38) active sont connectées en série au bus de donnée (12) dans un troisième mode de commutation pour la lecture et l'écriture.

4. Dispositif noeud de bus (30) selon l'une des revendications précédentes, **caractérisé en ce que** l'unité de commande maître (48) est reliée au changeur de fonction (40) et au moyen de communication interne (58).

5. Dispositif noeud de bus (30) selon l'une des revendications précédentes, **caractérisé en ce qu'**une interconnexion entre les ports internes suivants de l'unité esclave (36)
- premier port d'émission de l'esclave (Ts1),
- premier port de réception de l'esclave (Rs1),
- deuxième port d'émission de l'esclave (Ts2),
- deuxième port de réception de l'esclave (Rs2),
les ports internes suivants de l'unité maître (38)
- port d'émission du maître (Tm1),
- port de réception du maître (Rm1) et
les interfaces (32) et (34) du dispositif noeud de bus (30)
peut être provoquée par le changeur de fonction (40).

6. Dispositif noeud de bus (30) selon l'une des revendications précédentes, **caractérisé en ce que** dans un premier mode de commutation, l'unité maître (38) est séparée du bus de données (12), le dispositif noeud de bus (30) étant conçu pour fonctionner en tant qu'esclave, l'unité esclave (36) étant équipée d'un double jeu de ports de réception et d'émission et
- le changeur de fonction (40) étant commuté de telle sorte que
le premier port d'émission (Ts1) de l'unité esclave (36)
est relié à l'interface (32) du dispositif noeud de bus (30) et
le premier port de réception de l'esclave(Rs1) de l'unité esclave (36)
est relié à l'interface (32) du dispositif noeud de bus (30) et
le deuxième port d'émission (Ts2) de l'unité esclave (36)
est relié à l'interface (34) du dispositif noeud de bus (30) et
le deuxième port de réception de l'esclave (Rs2) de l'unité esclave (36)
est relié à l'interface (34) du dispositif noeud de bus (30).

7. Dispositif noeud de bus (30) selon l'une des revendications précédentes, **caractérisé en ce que** l'unité esclave (36) est équipée d'un double jeu de ports de réception et d'émission,
dans un deuxième mode de commutation, l'unité maître (38) passive peut être connectée au bus de données (12) uniquement pour la lecture et l'unité esclave (36) peut être connectée au bus de données (12),
le changeur de fonction (40) étant commuté de telle sorte que
- un port de réception (Rm1) de l'unité maître (38)
est relié à l'interface (34) du dispositif noeud de bus (30) et
- un premier port d'émission (Ts1) de l'unité esclave (36)
est relié à l'interface (32) du dispositif noeud de bus (30) et
- un premier port de réception (Rs1) de l'unité esclave (36)
est relié à l'interface (32) du dispositif noeud de bus (30) et
- un deuxième port d'émission (Ts2) de l'unité esclave (36)
est relié à l'interface (34) du dispositif noeud de bus (30) et
- un deuxième port de réception (Rs2) de l'unité esclave (36)
est relié à l'interface (34) du dispositif noeud de bus (30).

8. Dispositif noeud de bus (30) selon l'une des revendications précédentes, **caractérisé en ce que** l'unité esclave (36) est équipée d'un double jeu de ports de réception et d'émission, le changeur de fonction (40) dans un troisième mode de commutation, dans le cas où le système fonctionne sans défaut, étant commuté de telle sorte que
- le port d'émission (Tm1) de l'unité maître (38) active
est relié au premier port de réception (Rs1) de l'unité esclave (36) et
- le port de réception (Rm1) de l'unité maître (38) active
est relié au premier port d'émission (Ts1) de l'unité esclave (36) et
- le deuxième port d'émission (Ts2) de l'unité esclave (36)
est relié à l'interface (34) du dispositif noeud de bus (30) et
- le deuxième port de réception (Rs2) de l'unité esclave (36)
est relié à l'interface (34) du dispositif noeud de bus (30).

9. Dispositif noeud de bus (30) selon l'une des revendications précédentes, **caractérisé en ce que** l'unité esclave (36) est équipée d'un double jeu de ports de réception et d'émission, dans un troisième mode de commutation, l'unité esclave (36) et l'unité maître (38) active pouvant être connectées simultanément au bus de données (12) pour la lecture et pour l'écriture et en série,
le changeur de fonction (40), pour un fonctionnement du dispositif noeud de bus (30) sur un bus de données (12) configuré sous la forme d'un anneau ouvert, étant commuté de telle sorte
que
- le port d'émission (Tm1) de l'unité maître (38) active locale
est relié au premier port de réception (Rs1) de l'unité esclave (36) et
- le port de réception (Rm1) de l'unité maître (38) active
est relié à l'interface (32) du dispositif noeud de bus (30) et
- le premier port d'émission (Ts1) de l'unité esclave (36)
est relié à l'interface (32) du dispositif noeud de bus (30) et
- le deuxième port d'émission (Ts2) de l'unité esclave (36)
est relié à l'interface (34) du dispositif noeud de bus (30) et
- le port de réception de l'esclave (Rs2) de l'unité esclave (36)
est relié à l'interface (34) du dispositif noeud de bus (30).

10. Procédé pour faire fonctionner un bus de données (12) série qui fonctionne selon un procédé maître/esclave, **caractérisé en ce qu'**un premier dispositif noeud de bus (30) et un deuxième dispositif noeud de bus (30) sont raccordés au bus de données (12) et sont respectivement un dispositif noeud de bus (30) selon la revendication 1,
le premier dispositif noeud de bus (30) contenant une unité maître (38) active et le deuxième dispositif noeud de bus (30) une unité maître (38) passive et
le procédé comprenant les étapes de procédé suivantes :
a1. l'unité esclave (36) dans le premier dispositif noeud de bus (30) désactive le maître (38) actif dans le premier dispositif noeud de bus (30) en résultat d'une surveillance de la transmission de télégrammes de données (18) sur le bus de données (12),
a2. l'unité esclave (36) dans le deuxième dispositif noeud de bus (30) surveille le maître (38) actif dans le premier dispositif noeud de bus (30) à l'aide de données sur le bus de données (12),
b1. l'unité esclave (36) dans le premier dispositif noeud de bus (30), en cas de défaut, commute par son changeur de fonction (40) l'unité maître (38) active dans le premier dispositif noeud de bus (30) dans le premier mode de commutation, ce par quoi plus aucun télégramme (18) de l'unité maître (38) active ne parvient plus sur le bus (12), et
b2. l'unité esclave (36) dans le deuxième dispositif noeud de bus (30), en fonction d'un résultat de la surveillance, provoque une activation de l'unité maître (38) comprise dans le deuxième dispositif noeud de bus (30) .

11. Procédé selon la revendication 10, **caractérisé en ce que** l'unité esclave (36) est conçue pour reconnaître elle-même le cas d'activation à l'aide de télégrammes de données (18) manquants ou d'instants de réception non attendus.

12. Procédé selon l'une des revendications 10 ou 11, **caractérisé en ce qu'**une unité esclave (36) dans un dispositif noeud de bus (30), en surveillant la transmission des télégrammes de données (18) par le biais du bus de données (12), reconnaît que l'unité maître (38) émet régulièrement des télégrammes (18) et que les télégrammes (18) présentent un haut degré d'erreurs et l'unité esclave (36) dans une telle situation, à savoir dans le cas d'un dépassement d'un seuil défini comme mesure pour une fréquence d'erreurs et/ou une quantité d'erreurs, rend passive l'unité maître (38) du premier dispositif noeud de bus (30).

13. Procédé selon l'une des revendications 10 à 12, **caractérisé en ce que** le dispositif noeud de bus (30) est permuté par le changeur de fonction (40) entre les trois modes de commutation suivants :
- l'unité esclave (36), dans un premier mode de commutation sans unité maître (38), est connectée au bus de données (12),
- l'unité esclave (36), dans un deuxième mode de commutation avec une unité maître (38) connectée uniquement pour la lecture, est connectée au bus de données (12) et
- l'unité esclave (36) et l'unité maître (38) active, dans un troisième mode de commutation, sont connectées en série au bus de donnée (12) pour la lecture et l'écriture.

14. Procédé selon l'une des revendications 10 à 13, **caractérisé en ce que** lorsqu'un résultat de la surveillance, qui est déterminé par l'unité de commande maître (48), signifie un changement d'état du maître (38), l'unité de commande maître (48) comprise par l'unité esclave (36) informe directement l'unité maître (38) à propos du changement d'état qui y est nécessaire, à savoir à propos d'un changement d'état depuis un état actuellement passif et la simple écoute des télégrammes (18) communiquées par le biais du bus de données (12) vers un état actif avec une prise en charge de la fonction de maître de bus (14), l'unité de commande (48) générant un signal de permutation (50) destiné à permuter le changement de fonction (40).

15. Procédé selon l'une des revendications 10 à 14, **caractérisé en ce que** l'unité de commande maître (48), pour activer l'unité maître (38), écrit une valeur prédéfinie dans un registre de contrôle de maître (60) pour son activation, le registre de contrôle de maître (60) étant régulièrement surveillé par l'unité maître (38) .

16. Procédé selon l'une des revendications 10 à 15, **caractérisé en ce que** les données à transmettre à l'unité maître (38) passive et active sont adressées par un ou plusieurs objets de données de processus (PDO) ou objets de données de service (SDO) à l'unité esclave (36) locale du dispositif noeud de bus (30),
l'unité esclave (36) locale interprétant les objets de données de processus (PDO) ou les objets de données de service (SDO) entrants et, là-dedans,
- transmettant les données destinées à l'unité maître (38) directement dans une plage d'adresses d'une mémoire de l'unité maître (38)
- ou les lisant depuis là et transmettant les données au bus de données (12).

17. Procédé selon l'une des revendications 10 à 16, **caractérisé en ce que** l'unité maître (38), en tant que sous-groupe de l'unité esclave (36), est sollicitée par des noeuds de bus externes, l'unité esclave (36) faisant office de relais vers l'unité maître (38) passive et active.

18. Procédé selon l'une des revendications 10 à 17, **caractérisé en ce que** pour la synchronisation des noeuds de bus (18, 16, 30) avant, durant ou après un changement de maître, des temps de retard entre la nouvelle unité maître (38) et les autres noeuds sont calculés et
la nouvelle unité maître (38) utilise les temps de retard pour la synchronisation des noeuds de bus.

19. Dispositif d'automatisation d'énergie, **caractérisé en ce qu'**il comprend au moins un dispositif noeud de bus (30) selon l'une des revendications 1 à 9 et/ou est conçu pour fonctionner conformément à un procédé selon l'une des revendications 10 à 18.

20. Appareil technique médical, **caractérisé en ce qu'**il comprend au moins un dispositif noeud de bus (30) selon l'une des revendications 1 à 9 et/ou est conçu pour fonctionner conformément à un procédé selon l'une des revendications 10 à 18.

21. Installation de procédé industriel, **caractérisée en ce qu'**elle comprend au moins un dispositif noeud de bus (30) selon l'une des revendications 1 à 9 et/ou est conçue pour fonctionner conformément à un procédé selon l'une des revendications 10 à 18.

22. Installation de surveillance et/ou de commande d'aiguilles, **caractérisée en ce qu'**elle comprend au moins un dispositif noeud de bus (30) selon l'une des revendications 1 à 9 et/ou est conçue pour fonctionner conformément à un procédé selon l'une des revendications 10 à 18.

23. Pipeline, **caractérisé en ce qu'**il comprend au moins un dispositif noeud de bus (30) selon l'une des revendications 1 à 9 et/ou est conçu pour fonctionner conformément à un procédé selon l'une des revendications 10 à 18.

24. Tunnel, **caractérisé en ce qu'**il comprend au moins un dispositif noeud de bus (30) selon l'une des revendications 1 à 9 et/ou est conçu pour fonctionner conformément à un procédé selon l'une des revendications 10 à 18.

25. Aérogénérateur, **caractérisé en ce qu'**il comprend au moins un dispositif noeud de bus (30) selon l'une des revendications 1 à 9 et/ou est conçu pour fonctionner conformément à un procédé selon l'une des revendications 10 à 18.

26. Moyen de déplacement comprenant un bus de données (12) série pour un fonctionnement en maître/esclave avec plusieurs noeuds de bus, **caractérisé en ce qu'**il comprend au moins un dispositif noeud de bus (30) selon l'une des revendications 1 à 9 et/ou est conçu pour fonctionner conformément à un procédé selon l'une des revendications 10 à 18.

27. Véhicule automobile selon la revendication 26.

28. Véhicule ferroviaire selon la revendication 26.
